# EUROPÄISCHE PATENTSCHRIFT

(11) **EP 4 229 370 B1**
(45) Veröffentlichungstag und Bekanntmachung des Hinweises auf die Patenterteilung: **11.03.2026**
(21) Anmeldenummer: 21794337.2
(22) Anmeldetag: 13.10.2021
(51) Int. Cl.: G01J 5/00, G01J 5/06, G01J 5/02, G01J 1/44

(54) **VORRICHTUNG ZUR MESSTECHNISCHEN ERFASSUNG FEUERARTIGER ERSCHEINUNGEN, SOWIE SYSTEM ZUR BESEITIGUNG EINES DURCH EINE FEUERARTIGE ERSCHEINUNG ERZEUGTEN GEFAHRENZUSTANDS**
DEVICE FOR DETECTING BY MEASUREMENT FIRE-LIKE EVENTS, AND SYSTEM FOR ELIMINATING A HAZARDOUS STATE CAUSED BY A FIRE-LIKE EVENT
DISPOSITIF DE DÉTECTION MÉTROLOGIQUE DE MANIFESTATIONS D'INCENDIE, ET SYSTÈME D'ÉLIMINATION D'UN ÉTAT DE DANGER LIÉ À UNE MANIFESTATION D'INCENDIE

(30) Priorität: 15.10.2020 DE 102020127219
(43) Veröffentlichungstag der Anmeldung: 23.08.2023
(60) Teilanmeldung: 26156722.6
(73) Patentinhaber: Fagus-GreCon Greten GmbH & Co. KG, 31061 Alfeld (DE)
(72) Erfinder: MOHADJER, Amin, 30419 Hannover (DE); MEHLHORN, Michael, 37581 Bad Gandersheim (DE); HAAS, Mario, 31141 Hildesheim (DE)
(74) Vertreter: Patentanwälte Bauer Vorberg Kayser
(86) Internationale Anmeldenummer: PCT/EP2021/078339
(87) Internationale Veröffentlichungsnummer: WO 2022/079111

(56) Entgegenhaltungen:
- WO-A2-03/102494
- DE-A1- 102017 005 386
- US-A- 5 473 162
- US-A1- 2008 296 502

## Beschreibung

Die vorliegende Erfindung betrifft eine Vorrichtung zur messtechnischen Erfassung feuerartiger Erscheinungen, nämlich einer Funken-, Flammen-, Glut- oder Heißpartikelerscheinung, in einem mediendurchströmten oder medienbeladenen Reservoir.

Vorrichtungen zur messtechnischen Erfassung feuerartiger Erscheinungen - im Fachjargon auch als Funkensensoren oder Funkenmelder bezeichnet - werden in unterschiedlichsten Anwendungsgebieten eingesetzt, um frühzeitig feuerartige Erscheinungen sowie Zündinitiale zu erkennen und damit zu einer effektiven Feuer-, Brand-, oder Explosionsprävention beitragen zu können.

Funkenmelder können dabei in anlagenintegrierte Alarm- oder Löschsysteme eingebettet, oder aber entkoppelt von einem Alarm- oder Löschsystem eingesetzt werden, beispielsweise ausschließlich zur Überwachung eines mediendurchströmten oder medienbeladenen Reservoirs.

Unter einem Medium können im vorliegenden Kontext insbesondere Feststoffe, Feststoffpartikel, Staubpartikel etc. verstanden werden. Werden derartige Stoffe bzw. Partikel bewegt, insbesondere bei im Vergleich zum Normaldruck erhöhten oder verringerten Druckwerten, steigt das Risiko für das Auftreten feuerartiger Erscheinungen und damit auch die Gefahr einer Flammenbildung, eines Feuers oder einer Explosion (z.B. einer Staubexplosion).

Unter einem mit einem Medium "beladenen" Reservoirs kann beispielsweise ein mit einer Feststoffschüttung, einer Partikelschüttung oder einer Granulatschüttung beaufschlagtes Behältnis (z.B. ein Silo oder eine Lagerkammer) verstanden werden, in welchem das Medium ohne aktiven Transport (d.h. ohne aktive Bewegungsinduktion) vorgehalten ist, und - wenn überhaupt - schwerkraftbasierte Bewegungen des Mediums auftreten.

Unter einem "mediendurchströmten" Reservoirs kann ein (zumindest teilweise) nach außen geschlossener Förderweg, eine Förderleitung, ein Förderband, Fallschacht, ein Filter, ein Filtersystem oder ein Förderkanal verstanden werden, in welchem/welcher eine Medienströmung eines Mediums vorliegt und ein Medium (z.B. mechanisch oder pneumatisch) transportiert wird. In einem mediendurchströmten Reservoir liegt das Medium also vornehmlich in einem bewegten Zustand vor. In Abhängigkeit von der Art des Mediums, der Strömungsgeschwindigkeit des Mediums, sowie der Form und Größe des Reservoirs, können aufgrund von Medienbewegungen beispielsweise Verwirbelungen (insbesondere bei turbulenter Strömung), lokale Partikelakkumulationen, Verpuffungen etc. entstehen, was insgesamt zu einer erhöhten Reibung zwischen dem Medium zugehörigen Partikeln untereinander, sowie zwischen den Partikeln und Wandungen des Reservoirs führen kann. Damit assoziiert sein kann eine erhöhte Entwicklung von Reibungswärme.

Eine derartige Medien-Lagerung oder Medien-Bewegung tritt besonders häufig auf bei Herstellungs-, Verarbeitungs- oder Transportprozessen in der holzverarbeitenden Industrie, der Textilindustrie, der Möbelindustrie, der Kohleindustrie, der Nahrungsmittelindustrie, der Genussmittelindustrie (insbesondere Tabakindustrie), der Futtermittelindustrie, der Lederindustrie, der Gummiindustrie, der chemischen Industrie sowie bei der Schwarzpulver- und Feuermittelindustrie. Häufig finden sich in den genannten Industriefeldern Anlagen zum Zermahlen oder Zerkleinern von Feststoffen oder Feststoffgemischen, Trocknungsanlagen, Kühlanlagen, Verpress-Anlagen, allesamt mit ihren pneumatischen oder mechanischen Transport- und Absaugwegen.

Den vorangehend erwähnten Anwendungsgebieten bzw. Applikationsbeispielen ist eine erhöhte Feuer-, Brand- oder Explosionsgefahr gemein. Diese ist zumeist gegeben, wenn in einem Reservoir feine Partikel aus brennbarem (z.B. organischem) Material in hoher Partikeldichte vorliegen oder bewegt werden. Kommt es dann in einem mit dem Reservoir verbundenen Anlagen- oder Maschinenteil oder in dem Reservoir selbst zu einer feuerartigen Erscheinung (z.B. einer Funkenbildung, einer Flammenbildung, einer Glutbildung oder einer Heißpartikelbildung), die beispielsweise durch Verunreinigungen, Metallpartikel, Steine etc. induziert wurde, so kann dies zu der genannten Funkenbildung samt einer damit einhergehenden Entzündung des Mediums (bis hin zur Explosion) führen. Verstärkt werden kann dies durch die o.g. bewegungsinduzierten Verwirbelungs-, Verpuffungs- und Erwärmungseffekte der Medienpartikel.

Mittels eines Funkenmelders kann eine feuerartige Erscheinung zwar frühzeitig erkannt, jedoch damit allein eine potenziell daraus hervorgehende Gefahrsituation (z.B. ein Brand oder einer Explosion) nicht verhindert werden. Eine effektive Verhinderung kann nur dann erfolgen, wenn von einem Funkenmelder erkannte feuerartige Erscheinungen in Bezug auf die Wahrscheinlichkeit zur Auslösung einer tatsächlichen Gefahrsituation (d.h. eines Brandes oder einer Explosion), d.h. hinsichtlich ihrer potentiellen Brandauslösungsgefahr oder Explosionsauslösungsgefahr, bewertet werden, sodass im Anschluss daran - im Bedarfsfall - weitere Schritte zur Gefahrbeseitigung veranlasst werden können. Schließlich muss - sofern ein selbstständiges zum Erliegen kommen der feuerartigen Erscheinung nicht zu erwarten ist - zur wirkungsvollen Bekämpfung bzw. Verhinderung eines Brandes oder einer Explosion, ein Löschprozess der feuerartigen Erscheinung in Gang gesetzt werden. Dazu werden Funkenmelder häufig mit geeigneten Alarmsystemen, Löschsystemen oder Abschaltsystemen gekoppelt.

Ein Funkenmelder kann dazu derart in eine Wand eines Reservoirs eingebracht oder in Nähe einer strahlungsdurchlässigen Scheibe eines Reservoirs (z.B. einer Rohrleitung oder eines Kanals) angeordnet werden, dass eine feuerartige Erscheinung innerhalb des Reservoirs - z.B. optisch - mit Hilfe des Funkensensors erfasst werden kann. Wird eine Funkenbildung erkannt, kann dies z.B. an eine Löschzentrale weitergegeben werden, woraufhin unter Einsatz einer Löschautomatik eine Löscheinrichtung in dem Reservoir aktiviert und entstandene Funken, Glut, heiße Partikel oder ein Feuer gelöscht werden. Gleichsam kann auch eine alleinige Alarmauslösung zum manuellen Löschen des Brand- oder Explosionsherds beitragen.

Nachstehend sei auf ausgewählte aus dem Stand der Technik vorbekannte Funkenmelder Bezug genommen und deren Funktionsweise kurz erläutert. So ist aus der DE 20 2013 006 142 U1 ein Melder zum Erkennen von Funken-, Brand- und Glutnestern bekannt, der Lichtblitze im sichtbaren Spektralbereich oder alternativ thermische Strahlung im infraroten Spektralbereich detektieren kann. Hierzu wird der Melder mit einem eine lichtdurchlässige Scheibe aufweisenden Stutzen in eine Rohrwandung eingesetzt. Die zu detektierende elektromagnetische Strahlung wird über einen unter der Scheibe angeordneten Lichtleiter auf ein fotosensibles Element des Melders geleitet. Im Anschluss kann eine Auswertung der detektierten Signale erfolgen.

Da derartige Scheiben jedoch verschmutzen und somit eine zuverlässige Erfassung der Funken-, Brand- und Glutnester beeinträchtigen können, wurden im Stand der Technik Anordnungen und Verfahren beschrieben, mit welchen eine solche Verschmutzung frühzeitig erkannt werden kann.

So ist aus der WO 03/012381 A1 ein Verfahren bekannt, bei dem zwei diametral gegenüberliegend in eine Rohrwandung eingesetzte Melder vorgesehen sind. Zur Überprüfung der Funktionssicherheit der Melder wird von einem Sender des einen Melders ein Testsignal abgestrahlt, das, zumindest teilweise, von einem Empfänger des gegenüberliegenden Melders aufgefangen wird. Hieraus können Rückschlüsse in Bezug auf die Funktionssicherheit des Melders gezogen werden. Nachteilig ist jedoch die Notwendigkeit der diametral gegenüberliegenden Anordnung gleich zweier Funkenmelder. Entsprechend ist die Bereitstellung eines solchen Systems mit erhöhten Kosten und einem erhöhten Montageaufwand verbunden.

Jene der Anmelderin der vorliegenden Erfindung zuzuordnende Publikation DE 10 2017 005 386 A1 ist auf ein Verfahren zur Überwachung eines Materialstroms in einer Rohrleitung gerichtet, welches auf wenigstens einen Melder mit einer lichtdurchlässigen Scheibe zurückgreift, wobei unter der lichtdurchlässigen Scheibe wenigstens ein lichtempfindlicher Sensor angeordnet ist. Durch den Melder kann eine Erkennung von Funken-, Brand- oder Glutnestern in wenigstens einem ersten Spektralbereich und eine Erkennung einer Verschmutzung der Scheibe in einem zweiten, von dem ersten beabstandeten Spektralbereich geringerer Wellenlänge erfolgen.

Nebst der Gewährleistung einer grundsätzlichen Funktionstüchtigkeit eines Funkenmelders (z.B. durch eine integrierte Verschmutzungserkennung), ist es für die vorstehend genannten Anwendungen von besonderer Bedeutung, eine ausreichende Funktionssicherheit und Messpräzision sicherzustellen. Von besonderem Interesse ist es dabei, Fehlalarme möglichst in Gänze zu vermeiden und eine situations- bzw. medienangepasste Erkennung feuerartiger Erscheinungen zu ermöglichen. Erstrebenswert ist es also, jene durch das Medium, das Reservoir oder die Umgebung begründete und die Erfassung negativ beeinträchtigende Effekte möglichst vollständig zu kompensieren.

Die Vermeidung von Fehlalarmen ist von enormer Bedeutung, da mit einem Alarm häufig die Abschaltung von Maschinen, Anlagen oder gar einer ganzen Produktionshalle einhergehen kann. Ferner können Maschinen oder Anlagen durch den Einsatz von Löschmitteln beschädigt werden. Handelt es sich um einen Fehlalarm, können dadurch unnötige Kosten, Schäden etc. entstehen.

Wie bereits einleitend erwähnt, kann eine in dem Reservoir zu einem bestimmten Zeitpunkt vorliegende Medienpartikeldichte, die Art und Beschaffenheit des Mediums, oder ein Umgebungsparameter (z.B. die Temperatur oder der Druck) die Wahrscheinlichkeit für die Erzeugung einer feuerartigen Erscheinung (und eines möglichen daraus hervorgehenden Brand- oder Explosionsereignisses) beeinflussen. Derartige situations- oder medienbezogene Parameter bei der Gefahrenbewertung von mit einem Funkenmelder erhaltenen Messdaten zu berücksichtigen, ist von großem Interesse. Denn nicht jede mit einem Funkenmelder detektierte feuerartige Erscheinung begründet zugleich ein Risiko für eine Brand- oder Explosionsentstehung. So kann es bei bestimmten Medien üblich oder gar erwünscht sein, dass feuerartige Erscheinungen - bis zu einem bestimmten Maße - in einem das Medium aufnehmenden Reservoir auftreten.

Ferner besteht bei Funkenmeldern bzw. zugehörigen Alarmsystemen ein besonderer Bedarf an einer situations- und medienangepassten Performance-Einstellung der Funkenmelder, einerseits um deren Messpräzision zu erhöhen, andererseits um Blindfleck-Messungen zu vermeiden, d.h. zu vermeiden, dass in bestimmten Wellenlängenbereichen auftretende feuerartige Erscheinungen aufgrund einer minderen Messempfindlichkeit in einem bestimmten spektralen Bereich nicht erfasst werden können.

Als weiterer Stand der Technik sei die US 2008/296502 A1, die WO 03/102494 A2 und die US 5 473 162 A genannt.

Entsprechend liegt der vorliegenden Erfindung die Aufgabe zugrunde, eine Vorrichtung zur messtechnischen Erfassung feuerartiger Erscheinungen, in einem mediendurchströmten oder medienbeladenen Reservoir, bereitzustellen, womit die Gefahr von Fehlalarmen reduziert sowie die Erkennung und Gefahrenbewertung feuerartiger Erscheinungen verbessert wird.

Zur Lösung dieser Aufgabe wird eine Vorrichtung mit den Merkmalen des Anspruchs 1 bereitgestellt.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Die vorliegende Erfindung betrifft eine Vorrichtung zur messtechnischen Erfassung einer feuerartigen Erscheinung, nämlich einer Funken-, Flammen- oder Glut oder Heißpartikelerscheinung, in einem mediendurchströmten oder medienbeladenen Reservoir, mit einer zur Erfassung von Messdaten ausgebildeten Messanordnung, die Messanordnung umfassend eine erste und eine zweite Messeinheit zur Erfassung von seitens der feuerartigen Erscheinung abgegebener elektromagnetischer Strahlung in einem ersten respektive zweiten Wellenlängenbereich, und mit einem Prüfmittel,
wobei das Prüfmittel dazu eingerichtet ist,
   zu einem aktuellen Zeitpunkt auf Basis von mit der Messanordnung erfassten Messdaten zu prüfen, ob ein Anpassungskriterium erfüllt ist, **dadurch gekennzeichnet,** dass das Prüfmittel dazu eingerichtet ist, von der ersten und/oder zweiten Messeinheit erfasste Messdaten auf das Vorliegen einer Strahlungsabsorption der von einer feuerartigen Erscheinung abgegebenen elektromagnetischen Strahlung durch das Medium als Anpassungskriterium zu prüfen, wobei im Falle einer diesbezüglichen Positivfeststellung das Anpassungskriterium erfüllt ist, und das Steuermittel dazu eingerichtet ist, zu veranlassen,
   a. die zweite Messeinheit abzuschalten, oder
   b. eine Messempfindlichkeit der zweiten Messeinheit abzuschwächen und/oder
   c. eine Messempfindlichkeit der ersten Messeinheit zu erhöhen, und/oder
   d. einen bezüglich der ersten Messeinheit hinterlegten Schwellwert zur Auslösung eines Gefahrensignals anzupassen, insbesondere zu verringern,
oder wobei das Prüfmittel dazu eingerichtet ist,
   zu einem aktuellen Zeitpunkt auf Basis von hinterlegten Mediums- oder Umgebungs-spezifischen Kenndaten zu prüfen, ob ein Anpassungskriterium erfüllt ist, **gekennzeichnet durch** ein Berechnungsmittel, das Bestandteil des Prüfmittels ist oder mit diesem signaltechnisch verbunden ist, wobei das Berechnungsmittel dazu eingerichtet ist, auf Basis der hinterlegten Mediums- oder Umgebungs-spezifischen Kenndaten einen Wahrscheinlichkeitswert für das Vorliegen einer Strahlungsabsorption der von der feuerartigen Erscheinung abgegebenen elektromagnetischen Strahlung durch das Medium zu berechnen, wobei das Anpassungskriterium ein vorgegebener Wahrscheinlichkeitswert oder ein Wahrscheinlichkeitswertebereich ist, wobei das Prüfmittel dazu eingerichtet ist, zu prüfen, ob der berechnete Wahrscheinlichkeitswert mit dem vorgegebenen Wahrscheinlichkeitswert übereinstimmt oder in dem vorgegebenen Wahrscheinlichkeitswertebereich liegt, wobei im Falle einer diesbezüglichen Positivfeststellung das Anpassungskriterium erfüllt ist und das Steuermittel dazu eingerichtet ist, zu veranlassen,
   a. die zweite Messeinheit abzuschalten, oder
   b. eine Messempfindlichkeit der zweiten Messeinheit abzuschwächen und/oder
   c. eine Messempfindlichkeit der ersten Messeinheit zu erhöhen, und/oder
   d. einen bezüglich der ersten Messeinheit hinterlegten Schwellwert zur Auslösung eines Gefahrensignals anzupassen, insbesondere zu verringern.

Wesentlich für die vorliegende Erfindung ist, dass durch die erfindungsgemäß eröffnete (situationsadäquate) Messempfindlichkeits- oder Betriebsparameteranpassung einerseits effektiv zwischen gefährlichen und ungefährlichen feuerartigen Erscheinungen, und andererseits zwischen gefährlichen feuerartigen Erscheinungen und ungefährlichem Umgebungslicht unterschieden werden kann. Durch eine intelligente Erkennungstechnologie werden somit Fehlalarme vermieden. Die Messempfindlichkeit oder Betriebsparameter können zudem auf eine individuellen Anwendungsfall (z.B. dem Einsatz in einer Produktionsanlage zur Tabak- oder Schießpulverherstellung) und den damit einhergehenden Medien- oder Umgebungs-spezifischen Voraussetzungen angepasst werden, sodass eine erkannte feuerartige Erscheinung mit Blick auf die Gefahr einer Brand- oder Explosionsentzündung unter Berücksichtigung der konkret vorliegenden Gegebenheiten bewertet werden kann. Denn - je nach Einsatzgebiet oder Anwendungsfall - ist nicht jede erkannte feuerartige Erscheinung gleichsam mit einer erhöhten Brand- oder Explosionsgefahr assoziiert. Auch die Wahrscheinlichkeit für messtechnisch bedingte Fehlalarme lässt sich mit einer erfindungsgemäßen Vorrichtung deutlich reduzieren. Entsprechend ermöglicht eine erfindungsgemäße Vorrichtung eine gefahrensituationsangepasste Erkennung feuerartiger Erscheinungen, vermöge dessen unnötige Fehlalarme vermieden werden. Mit der vorliegenden Erfindung lässt sich die Messempfindlichkeit jener einer erfindungsgemäßen Vorrichtung zugehörigen Messeinheiten in Abhängigkeit eines Anpassungskriteriums flexibel nachregeln bzw. zugehörige Schwellwerte anpassen.

Erfindungsgemäß beansprucht ist zunächst eine Vorrichtung zur messtechnischen Erfassung einer feuerartigen Erscheinung. Unter einer "Vorrichtung" kann ein körperlicher Gegenstand verstanden werden, der sich aus einer oder mehreren körperlichen Komponenten zusammensetzen kann. Eine Vorrichtung kann eine mechanische, elektrische, messtechnische oder eine anderweitige Funktion aufweisen. Ferner kann eine Vorrichtung ein Gehäuse umfassen, in welchem der Vorrichtung zugehörige Komponenten angeordnet sein können. Eine Vorrichtung kann zudem aus einer Mehrzahl von körperlichen Komponenten zusammengesetzt sein, die separat, d.h. beabstandet zueinander angeordnet sind. Auch können die Komponenten unmittelbar aneinander angrenzend angeordnet sein. Komponenten können dabei mechanisch, signaltechnisch und/oder elektrisch miteinander verbunden sein. Auch Recheneinheiten, Server, Kommunikationsmittel, Kommunikationsschnittstellen, Mikrocontroller, Rechen- oder Steuerplatinen sowie andere Funktionsbauteile können Bestandteil einer Vorrichtung sein oder eine Vorrichtung bereitstellen. Auf einer Vorrichtung bzw. einer Vorrichtungskomponente können Programme, Applikationen, Applikationssoftware, Software, Routinen, Algorithmen etc. ausgeführt werden.

Unter einer "messtechnischen Erfassung" eines feuerartigen Ereignisses kann eine Detektion von seitens der feuerartigen Erscheinung abgegebener Strahlung (z.B. emittierter Strahlung) verstanden werden. Die Strahlung kann dabei wellenlängenselektiv oder in vorgegebenen Spektralbereichen, d.h. Wellenlängenbereichen, erfasst werden. Dabei können beispielsweise wellenlängenabhängige Strahlungsintensitäten (z.B. in Form spektraler Peaks) erfasst werden. Unter einer "Erfassung" kann nicht nur die Detektion als solches verstanden werden, sondern auch eine (zumindest temporäre) Aufnahme, d. h. Aufzeichnung oder Abspeicherung, der Daten. Durch charakteristische Wellenlängen, Wellenlängenbereiche, Strahlungsintensitäten, Peak- oder Kurveneigenschaften bzw. Kurvenformen der aufgenommenen Strahlungsdaten kann auf das Vorliegen einer feuerartigen Erscheinung rückgeschlossen werden. Auch kann ein solcher Rückschluss einer Auswertung der aufgenommenen Daten bedürfen. Zur Erfassung der von der feuerartigen Erscheinung abgegebenen Strahlung werden vornehmlich Messeinheiten mit fotosensitiven Elementen eingesetzt, z.B. Fotodioden. Die dort empfangene Strahlung einer feuerartigen Erscheinung kann in Form von erzeugten Spannungen aufgenommen werden. Der Intensitätswert der Spannungen kann dabei proportional zur Intensität der bei einer bestimmten Wellenlänge oder in einem Wellenlängenbereich vorliegenden Strahlungsintensität sein. Derart aufgenommene Messdaten können vorangehend zu einer qualitativen bzw. quantitativen Auswertung in Bezug auf eine feuerartige Erscheinung einer Vorprozessierung unterzogen werden. Dabei können die erfassten Daten (z.B. Rohdaten) in ein gewünschtes Datenformat oder eine Datendarstellung überführt werden.

Unter einer "feuerartigen Erscheinung" kann im vorliegenden Kontext insbesondere eine optisch wahrnehmbare Funken-, Flammen- oder Gluterscheinung verstanden werden. Aber auch blitzartige Erscheinungen, Glutnester, Funken- oder Flammenakkumulationen können als feuerartige Erscheinung verstanden werden. Auch eine Flamme, ein Feuer oder eine Mikroexplosion kann als feuerartige Erscheinung verstanden werden. Gleichsam kann auch ein Partikel von hoher Temperatur, also ein heißer Partikel (sog. Heißpartikel), eine Heißpartikelerscheinung darstellen, welche im Kontext der vorliegenden Erfindung ebenfalls als optisch wahrnehmbare feuerartige Erscheinung verstanden werden kann. Heiße Partikel können beispielsweise Schweißperlen oder abgefallene Maschinenteile sein, welche sich durch Reibung aufheizen und entsprechend hohe Temperaturen annehmen können. Auch metallische Verunreinigungen bei der Holzverarbeitung oder dem Holzrecycling, die in Zerkleinerungsprozessen neben dem üblichen Funkenflug erhitzt und weitertransportiert werden, können als Heißpartikel verstanden werden.

Der Terminus "optisch wahrnehmbar" meint hierbei, dass die feuerartige Erscheinung aufgrund von seitens der feuerartigen Erscheinung abgegebener elektromagnetischer Strahlung optisch erfasst werden kann, z.B. durch eine der Messeinheiten. Eine "feuerartige Erscheinung" kann ein Zündinitial oder ein Explosionsinitial darstellen. Aus einer feuerartigen Erscheinung können sich entsprechend Feuer, Brände, Glutakkumulationen, Glimmnester, Flammenherde etc. mit enormen Schadenspotential für Maschinen, Anlagen und Menschen entwickeln. Feuerartige Erscheinungen geben dabei in Abhängigkeit der Art der feuerartigen Erscheinung (Funke, Flamme, Glut, Heißpartikel etc.) und der Temperatur der feuerartigen Erscheinung elektromagnetische Strahlung in unterschiedlichen Wellenlängenbereichen ab.

Wie erwähnt, bezieht sich die Erfindung auf die Erkennung feuerartiger Erscheinungen in einem "mediendurchströmten oder medienbeladenen Reservoir".

Unter einem "Medium" können im vorliegenden Kontext Feststoffe, Feststoffpartikel, Gemische verschiedener Feststoffe oder Feststoffpartikel-Gemische, Staubpartikel etc. verstanden werden. Das Medium kann Feststoffpartikel von unterschiedlicher Partikelgröße aufweisen. Auch kann das Medium flüssige oder gasförmige Komponenten enthalten. Unter einem Medium können auch Feststoffe verstanden werden, die während des Transports ihren Aggregatszustand zumindest teilweise ändern, oder in Bezug auf Ihre Form und/oder Konsistenz Änderungen erfahren. Auch kann es sich um ein pastöses, gelartiges Medium handeln. Grundsätzlich vorstellbar ist es auch, die vorliegende Erfindung bei Medien einzusetzen, die in flüssigem oder gasförmigem Zustand in dem Reservoir vorliegen oder durch dieses transportiert werden, solange dabei feuerartige Erscheinungen auftreten und diese messtechnisch (optisch) erfassbar sind. Werden derartige Stoffe bzw. Partikel bewegt, insbesondere bei im Vergleich zum Normaldruck erhöhten oder verringerten Druckwerten, steigt das Risiko für das Auftreten feuerartiger Erscheinung und damit auch die Gefahr einer Flammenbildung, eines Feuers oder einer Explosion (z.B. einer Staubexplosion). Dies wird verstärkt von durch Maschinen- oder Anlagenkomponenten eingetragenen Schmutz, Staub, Fremdpartikel, Metallpartikel oder gar einen unmittelbaren Funkeneintrag, der sich in dem Reservoir ausbreiten kann.

Unter einem mit einem Medium "beladenen" Reservoirs kann - wie schon einleitend erwähnt - beispielsweise ein mit einer Feststoffschüttung, einer Partikelschüttung oder einer Granulat-Schüttung beaufschlagtes Behältnis (z.B. ein Silo oder eine Lagerkammer) verstanden werden, in welchem das Medium ohne aktiven Transport (d.h. ohne aktive Bewegungsinduktion) vorgehalten ist, und - wenn überhaupt - schwerkraftbasierte Bewegungen des Mediums auftreten. Gleiches kann für die vorangehend beschriebenen weiteren Medienformen gelten, die eine von einem Festzustand abweichenden Aggregatszustand aufweisen.

Unter einem "mediendurchströmten" Reservoir kann ein (zumindest teilweise) nach außen geschlossener Förderweg, eine Förderleitung oder ein Förderkanal verstanden werden, in welchem/welcher eine Medienströmung eines Mediums (z.B. mechanisch oder pneumatisch) transportiert wird. Auch ein mit einer Förderschnecke versehener Förderkanal kann als ein mediendurchströmtes Reservoir angesehen werden. Ebenso kann ein Fallschacht, ein Filter, ein Filtersystem oder ein Förderband ein mediendurchströmtes Reservoir bereitstellen. In einem mediendurchströmten Reservoir liegt das Medium also vornehmlich in einem bewegten Zustand vor. In Abhängigkeit von der Art des Mediums, der Strömungsgeschwindigkeit des Mediums, sowie der Form und Größe des Reservoirs, können aufgrund von Medienbewegungen beispielsweise Verwirbelungen (insbesondere bei turbulenter Strömung), lokale Partikelakkumulationen, Verpuffungen etc. einhergehen, was insgesamt zu einer erhöhten Reibung zwischen dem Medium zugehörigen Partikeln untereinander sowie zwischen den Partikeln und Wandungen des Reservoirs führen kann. Damit assoziiert sein kann eine erhöhte Entwicklung von Reibungswärme. Verstärkt werden kann dies von durch Maschinen- oder Anlagenkomponenten eingetragenen Schmutz, Staub, Fremdpartikel, Metallpartikel oder gar einen unmittelbaren Funkeneintrag, der sich in dem Reservoir ausbreiten kann.

Eine erfindungsgemäße Vorrichtung umfasst - wie erwähnt - eine Messanordnung, die zur Erfassung von Messdaten ausgebildet ist. Der Terminus "Messanordnung" ist dahingehend zu verstehen, dass es sich um eine Anordnung einer Mehrzahl von zur Erfassung von Messdaten ausgebildeten Einheiten handeln kann, vorliegend der ersten, zweiten und dritten Messeinheit sowie der Sensoreinheit. Ausdrücklich betont sei, dass es sich bei der Sensoreinheit im funktionellen Sinne ebenfalls um eine Messeinheit handelt, der Begriff der "Sensoreinheit" wurde vorliegend verwendet, um dessen optionales Vorliegen zu betonen. Eine Messanordnung kann jedoch auch ausschließlich eine Messeinheit umfassen. Die Messeinheiten bzw. die Sensoreinheit können - für sich genommen - jeweils eines oder mehrere Mess- bzw. Sensorelemente aufweisen. Die Messeinheiten weisen vorzugsweise jeweils zumindest ein strahlungsempfindliches elektrisches Bauelement auf. Beispielsweise kann es sich dabei um eine Fotodiode oder einen Fotowiderstand handeln.

Die erste Messeinheit ist zur Erfassung von seitens der feuerartigen Erscheinung abgegebener elektromagnetischer Strahlung in einem ersten Wellenlängenbereich ausgebildet. Der erste Wellenlängenbereich kann sich von 100 nm - 1500 nm, und bevorzugt von 750 nm - 1200 nm erstrecken, wobei das Messempfindlichkeits-Optimum der ersten Messeinheit in einem Wellenlängenbereich von ungefähr 950 nm, vorzugsweise genau bei 950 nm liegt. Die erste Messeinheit umfasst vorzugsweise ein Si-basiertes Messelement, z.B. einen Si-basierten Halbleiter, der Teil einer Fotodiode sein kann. Vorgesehen sein kann zudem, dass die erste Messeinheit eine Mehrzahl von Si-basierten Messelementen umfasst. Die erste Messeinheit weist eine hervorragende Empfindlichkeit (Sensitivität) für feuerartige Erscheinungen (insbesondere Funken) mit einer Temperatur von > 1000 °C auf. Es kann sich bei der ersten Messeinheit also um eine klassische Funkenmesseinheit handeln. In einem Wellenlängenbereich von > 1000 nm weist die erste Messeinheit eine eher geringe Messempfindlichkeit auf. Vorteilhaft ist jedoch, dass sich die mit der ersten Messeinheit erfassten Messsignale relativ gut verstärken lassen. Die Verstärkung kann über eine klassische analoge oder digitale Signalverstärkung erfolgen (z.B. unter Einsatz eines Amplifikationsmoduls). Gleichsam kann aber auch eine für die erste Messeinheit hinterlegte Fehlerschwelle oder ein zur Auslösung eines Gefahrensignals hinterlegter Schwellwert angepasst werden. Auch dies kann als "Anpassung einer Messempfindlichkeit" verstanden werden. Zwar ist die erste Messeinheit für elektromagnetische Strahlung > 1000 nm nur schwach sensitiv, wird das Messsignal jedoch ausreichend verstärkt, so lassen sich jene in diesem Wellenlängenbereich mit der ersten Messeinheit in geringer Signalschwäche erfasste Signale dahingehend verstärken, dass den verstärkten Messdaten qualitative und/oder quantitative Informationen zu - in diesem Wellenlängenbereich elektromagnetische Strahlung abgebenden - feuerartigen Erscheinungen entnommen werden können.

Die zweite Messeinheit ist zur Erfassung von seitens der feuerartigen Erscheinung abgegebener elektromagnetischer Strahlung in einem zweiten Wellenlängenbereich ausgebildet. Der zweite Wellenlängenbereich kann bei 1000 nm - 3500 nm liegen, bevorzugt bei 1500 nm - 3000 nm, und besonders bevorzugt bei 2000 nm - 2800 nm. Damit ist der zweite Wellenlängenbereich in einem langwelligeren Spektralbereich als der erste Wellenlängenbereich angesiedelt. Die zweite Messeinheit umfasst vorzugsweise ein PbS-basiertes Messelement, z.B. einen PbS-basierten Halbleiter, der Teil einer Fotodiode sein kann. Vorgesehen sein kann zudem, dass die zweite Messeinheit eine Mehrzahl von PbS-basierten Messelementen umfasst. Die zweite Messeinheit eignet sich besonders zur messtechnischen Erfassung von feuerartigen Erscheinungen in einem Temperaturbereich von 300 °C - 500 °C. In dem genannten Wellenlängenbereich weist die zweite Messeinheit eine hohe Empfindlichkeit auf, jedoch umfassen die erfassten Signale auch einen relativ hohen Rauschanteil. Die erhaltenen Signale lassen sich nur geringfügig verstärken. Die in dem genannten Wellenlängenbereich erzielbaren Signal-zu-Rausch-Verhältnisse sind also eher gering. Kommt es beispielsweise zu feuerartigen Erscheinungen, die elektromagnetische Strahlung im zweiten Wellenlängenbereich abgeben, zu Strahlungsabsorptionsphänomenen (beispielsweise durch organische Partikel), so wird die zweite Messeinheit - aufgrund der absorbierten Strahlung - in dem zweiten Wellenlängenbereich in einem gewissen Maße "blind", d.h. eine messtechnische Erfassung der feuerartigen Erscheinung durch die zweite Messeinheit ist verhindert. In einem solchen Fall können derartige feuerartige Erscheinungen - bei geeigneter Messempfindlichkeitsanpassung - aber von der ersten Messeinheit erfasst werden. Entsprechend ist die Kenntnis für das Auftreten solcher Absorptionsphänomene von besonderer Bedeutung für eine entsprechende Anpassung der Messempfindlichkeit. Die Kenntnis bzw. Wahrscheinlichkeit für das Vorliegen einer solchen Strahlungsabsorption kann das eine Messempfindlichkeitsanpassung (insbesondere in der ersten Messeinheit) bedingende (zu erfüllende) Anpassungskriterium darstellen. Auf das Vorliegen einer solchen Strahlungsabsorption kann auf Basis von mit der Messanordnung erfassten Messdaten (z.B. aus den Intensitätsdaten der mit der ersten und zweiten Messeinheit erfassten Messdaten) geschlossen werden. Auch aus mit der Sensoreinheit erfasste Mediums- oder Umgebungsspezifische Messdaten kann auf das Vorliegen einer solchen Strahlungsabsorption geschlossen werden. Gleichsam aus einer Mess- bzw. Sensoreinheitsübergreifenden Bewertung sämtlicher erfasster Messdaten. Auch auf Basis von hinterlegten Mediums- oder Umgebungs-spezifischen Kenndaten kann geprüft werden, ob das Auftreten einer solchen Strahlungsabsorption zu erwarten ist. Zur Prüfung des Vorliegens der beschriebenen Strahlungsabsorption kann auch eine kombinierte Auswertung von messtechnisch erfassten Messdaten und hinterlegten Kenndaten vorgenommen werden.

Nach der vorliegenden Offenbarung kann optional eine dritte Messeinheit vorgesehen sein, die zur Erfassung elektromagnetischer Strahlung von Umgebungslicht in einem Wellenlängenbereich von 100 nm - 500 nm eingerichtet ist. Insbesondere kann die dritte Messeinheit zur Erfassung von UV-Licht (UV-A, UV-B, UV-C) eingerichtet sein, also zur Erfassung von elektromagnetischer Strahlung in einem Wellenlängenbereich von 100 nm - 380 nm. Die dritte Messeinheit kann der ersten Messeinheit entsprechen, jedoch ohne einen den erfassbaren Wellenlängenbereich einschränkenden Filter. Entsprechend kann die erste Messeinheit einen Filter aufweisen. Auch auf der zweiten Messeinheit kann ein Filter angeordnet sein, welcher bei einer Wellenlänge von 1500 nm öffnet. Umgebungslicht kann in das Reservoir eintreten durch Öffnungen im Reservoir als solchem oder durch Öffnungen in einem zugehörigen Kanal- oder Leitungssystem. Auch von Maschinen- oder Anlagenkomponenten kann eine Lichterzeugung ausgehen. Umgebungslicht kann die zuverlässige Erfassung feuerartiger Erscheinungen mit der ersten und/oder zweiten Messeinheit stören, insbesondere jedoch die Erfassungs-Performance der ersten Messeinheit, da der Wellenlängenbereich des Umgebungslichts im Bereich des von der ersten Messeinheit erfassbaren Spektralbereich liegt. Entsprechend kann das Vorliegen von Umgebungslicht ein Anpassungskriterium sein, in Folge dessen eine Messempfindlichkeitsanpassung in der ersten Messeinheit vorgenommen wird (z.B. um eine bessere Erfassung der von einer feuerartigen Erscheinung abgegebenen elektromagnetischen Strahlung zu gewährleisten). Gleichsam kann auch vorgesehen sein, die erste Messeinheit bei Vorliegen von Umgebungslicht abzuschalten, um eine diesbezügliche Messbeeinträchtigung zu vermeiden. Umgebungslicht kann jedoch auch auf Basis von mit der ersten und/oder zweiten Messeinheit erfassten Messdaten ermittelt werden, beispielsweise anhand des zeitlichen Signalverlaufs bzw. der Peakform. Denn während feuerartige Erscheinungen (z.B. Funken) stets eine sich in der Zeitdomäne verändernde Peakform aufweisen, ist die Peakform von stationärem Umgebungslicht unveränderlich bzw. konstant. Entsprechend kann aus dem zeitlichen Signalverlauf der mit der ersten und/oder zweiten Messeinheit erfassten Messdaten auf das Vorliegen von Umgebungslicht geschlossen werden.

Nach der vorliegenden Offenbarung kann optional in der Messanordnung eine Sensoreinheit vorgesehen sein, die dazu eingerichtet ist, Medien-spezifische oder Umgebungs-spezifische Messdaten zu erfassen, beispielsweise einen Druck, eine Dichte, eine Temperatur, einen Feuchtigkeitswert, eine Partikelkonzentration oder eine Gaskonzentration des Mediums oder der Umgebung des Mediums. Die mit der Sensoreinheit erfassbaren Messdaten werden gegebenenfalls bei der Gefahrenbewertung einer mit den Messeinheiten erfassten feuerartigen Erscheinung mitberücksichtigt. Auch können die genannten Messdaten bei der Prüfung auf das Vorliegen eines Anpassungskriteriums berücksichtigt werden. Es sei betont, dass die Sensoreinheit auch außerhalb eines die erste, zweite und dritte Messeinheit beinhaltenden Gehäuses angeordnet sein kann. Die Sensoreinheit kann beispielsweise stationär in dem Reservoir, an dem Reservoir oder außerhalb des Reservoirs installiert sein. Auch kann die Sensoreinheit in bzw. an einem Anlagen- oder Maschinenteil angeordnet sein, welches mit dem Reservoir in Verbindung steht.

Wie erwähnt, zeichnet sich eine erfindungsgemäße Vorrichtung durch ein Prüfmittel aus , das dazu eingerichtet ist, zu einem aktuellen Zeitpunkt auf Basis von mit der Messanordnung erfassten Messdaten oder hinterlegten Mediums- oder Umgebungs-spezifischen Kenndaten zu prüfen, ob ein Anpassungskriterium erfüllt ist, wobei bei Erfüllung des Anpassungskriteriums unter Einsatz eines Steuermittels eine Messempfindlichkeit oder ein Betriebsparameter zumindest einer der Messeinheiten situationsadäquat anpassbar ist. Die erwähnte Prüfung und ggf. Anpassung können zu aktuellen Zeitpunkten in einem vorgegebenen Zeitintervall, zu festgelegten Zeitpunkten (auch aperiodisch) oder kontinuierlich (d.h. andauernd) vorgenommen werden. Auch kann eine solche Prüfung nach einem Systemwechsel (z.B. einem Austausch des Mediums) erfolgen.

Das Prüfmittel kann eine Recheneinheit und/oder eine auf einer Recheneinheit abgelegte Routine, Software oder ein Algorithmus sein. Unter einem "Prüfmittel" kann auch eine Recheneinheit in Kombination mit einer Routine, einer Software oder einem Algorithmus verstanden werden. Ein Prüfmittel kann eine oder mehrere Recheneinheiten und/oder eine oder mehrere Routinen, Softwareprogramme, oder Algorithmen umfassen. Ferner kann das Prüfmittel in Form eines Mikrocontrollers ausgebildet sein, gleichsam ein logischer Schaltkreis, z.B. ein FPGA oder ein ASIC sein. Das Anpassungskriterium kann nutzerseitig vorgegeben werden. Auch ist es möglich, dass das Anpassungskriterium unter Einsatz des Prüfmittels bzw. einer zugehörigen Recheneinheit, einer Routine, Software oder eines Algorithmus zu ermitteln. Das Anpassungskriterium kann in vorgegebenen Zeitintervallen, zu vorgegebenen Zeitpunkten oder kontinuierlich einer Überprüfung bzw. einer Anpassung (z.B. Aktualisierung) unterzogen werden. Die erwähnten hinterlegten Mediums- oder Umgebungs-spezifischen Kenndaten können auf einer Datenbank abgelegt sein, die Bestandteil des Prüfmittels (der Recheneinheit) ist. Alternativ dazu können die Mediums- oder Umgebungs-spezifischen Kenndaten auf einer externen Datenbank abgelegt sein, wobei das Prüfmittel signaltechnisch mit der externen Datenbank verbunden ist und somit auf die dort abgelegten Daten zugreifen kann.

Unter Einsatz des Prüfmittels kann also einerseits geprüft werden, ob die Notwendigkeit für die Anpassung einer Messempfindlichkeit oder eines Betriebsparameters besteht. Andererseits kann unter Einsatz des Prüfmittels eine dahingehende Bewertung vorgenommen werden, ob es sich bei der erfassten feuerartigen Erscheinung um ein Ereignis handelt, von welchem eine erhöhte Brand- oder Explosionsgefahr ausgeht oder nicht. Im letztgenannten Fall kann dies an ein Alarmsystem weitergegeben werden.

Wie beschrieben, ist bei Erfüllung des Anpassungskriteriums (dies wird durch das Prüfmittel geprüft) unter Einsatz eines Steuermittels eine Messempfindlichkeit oder ein Betriebsparameter zumindest einer der Messeinheiten situationsadäquat anpassbar. Das Steuermittel ist dazu signaltechnisch mit dem Prüfmittel verbunden, beispielsweise über eine kabellose oder kabelgebundene Signalverbindung. Gleichsam können Steuermittel und Prüfmittel in einer gemeinsamen Recheneinheit implementiert sein oder auf einer gemeinsamen Rechenplatine ausgeführt werden. Auch das Steuermittel kann eine Routine, eine Software oder ein Algorithmus sein. Ferner kann das Steuermittel in Form eines Mikrocontrollers ausgebildet sein, gleichsam ein logischer Schaltkreis, z.B. ein FPGA oder ein ASIC sein.

Zu einem aktuellen Zeitpunkt kann - sofern das Anpassungskriterium A erfüllt ist - eine Messempfindlichkeit oder ein Betriebsparameter zumindest einer der Messeinheiten situationsadäquat angepasst werden. Dazu kann über das Steuermittel eine Messempfindlichkeit und/oder ein Betriebsparameter in der ersten Messeinheit, eine Messempfindlichkeit und/oder ein Betriebsparameter in der zweiten Messeinheit, und/oder eine Messempfindlichkeit und/oder ein Betriebsparameter in der dritten Messeinheit angepasst werden. Die Einstellung der ersten oder zweiten Messempfindlichkeit kann über (der ersten und zweiten Messeinheit zugeordnete) Amplifikationsmodule erfolgen, die mit dem Steuermittel signaltechnisch verbunden sind. Gleichsam können die Amplifikationsmodule mit den Messeinheiten signaltechnisch verbunden sein. Die Amplifikationsmodule können beispielsweise in Form von Signalverstärkern oder Vorverstärkern ausgebildet sein, wobei diese sowohl analoger oder digitaler Natur sein können. Ferner kann die Messempfindlichkeitsanpassung eine Anpassung eines bezüglich der ersten und/oder zweiten Messeinheit hinterlegten Schwellwerts zur Auslösung eines Gefahrensignals betreffen. Die Schwellwerte können in den Messeinheiten als solche, dem Prüfmittel, der Datenbank oder dem Steuermittel abgelegt sein. Die Betriebsparameter betreffen insbesondere einen Betriebsstatus der Messeinheiten insbesondere einen Online-Status (Erfassung von Messdaten möglich), einen Standby-Status (Energieversorgung im Standby, Aktivierung zur Erfassung von Messdaten erforderlich) oder einen Offline-Status (keine Energieversorgung bzw. ausgeschalteter Status, keine Erfassung von Messdaten möglich).

Weiterhin kann vorgesehen sein, dass ein jeweiliges Messempfindlichkeits-Optimum der ersten und zweiten Messeinheit in unterschiedlichen Wellenlängenbereichen liegt. Durch ein in unterschiedlichen Spektralbereichen liegendes Messempfindlichkeits-Optimum der ersten und zweiten Messeinheit können feuerartige Erscheinungen erfasst werden, die in unterschiedlichen Wellenlängenbereichen elektromagnetische Strahlung abgeben. Da feuerartige Erscheinungen unterschiedlicher Temperaturen oder unterschiedlicher Natur (z.B. ein Funke oder eine Flamme) elektromagnetische Strahlung in unterschiedlichen Wellenlängenbereichen abgeben, können diese somit zuverlässig erfasst werden. Ferner ist damit ermöglicht, feuerartige Erscheinungen (bzw. die zugehörige elektromagnetische Strahlung) in ihren jeweiligen Wellenlängenbereichen mit optimierter Sensitivität zu erfassen.

Wie erwähnt, kann die erste Messeinheit zur Erfassung von elektromagnetischer Strahlung in einem Wellenlängenbereich von 100 nm - 1500 nm, und bevorzugt von 750 nm - 1200 nm eingerichtet sein, wobei das Messempfindlichkeits-Optimum der ersten Messeinheit in einem Wellenlängenbereich von ungefähr 950 nm, vorzugsweise genau bei 950 nm liegt. Ferner wurde bereits beschrieben, dass die zweite Messeinheit zur Erfassung von elektromagnetischer Strahlung in einem Wellenlängenbereich von 1000 nm - 3500 nm, bevorzugt von 1500 nm - 3000 nm, und besonders bevorzugt von 2000 nm - 2800 nm eingerichtet sein kann.

Wie erwähnt, weist die erste Messeinheit in einem Wellenlängenbereich von > 1000 nm eine relativ geringe Messempfindlichkeit auf. Zwar ist die erste Messeinheit für elektromagnetische Strahlung > 1000 nm nur schwach sensitiv, wird das Messsignal jedoch ausreichend verstärkt, so lassen sich jene in diesem Wellenlängenbereich mit der ersten Messeinheit in geringer Signalschwäche erfasste Signale dahingehend verstärken, dass den verstärkten Messdaten qualitative und/oder quantitative Informationen zu - in diesem Wellenlängenbereich elektromagnetische Strahlung abgebenden - feuerartigen Erscheinungen entnommen werden können. Die zweite Messeinheit eignet sich - wie erwähnt - besonders zur messtechnischen Erfassung von feuerartigen Erscheinungen in einem Temperaturbereich von 300 °C - 500 °C. In dem genannten Wellenlängenbereich weist die zweite Messeinheit eine hohe Empfindlichkeit auf, jedoch umfassen die erfassten Signale auch einen relativ hohen Rauschanteil. Die erhaltenen Signale lassen sich nur geringfügig verstärken. Kommt es bei feuerartigen Erscheinungen, die elektromagnetische Strahlung insbesondere im zweiten Wellenlängenbereich abgeben, zu Strahlungsabsorptionsphänomenen (beispielsweise durch organische Partikel oder Staub), so wird die zweite Messeinheit - aufgrund der absorbierten Strahlung - in dem zweiten Wellenlängenbereich in einem gewissen Maße "blind", d.h. eine messtechnische Erfassung der feuerartigen Erscheinung durch die zweite Messeinheit ist verhindert. In einem solchen Fall können derartige feuerartige Erscheinungen - bei geeigneter Messempfindlichkeitsanpassung (Verstärkung oder Schwellwertanpassung) - aber von der ersten Messeinheit erfasst werden. Aus dem genannten Beispiel lässt sich demnach ableiten, dass aufgrund einer medienbedingten Gegebenheit (oder eines Ereignisses wie einer Strahlungsabsorption) eine an die konkret vorliegenden Erfordernisse angepasste Messempfindlichkeitseinstellung der ersten und zweiten Messeinheit vorgenommen werden kann. Entsprechend kann auch bei einem Funktionsausfall, einer Minder-Performance oder aus messtechnischen Gründen eine Anpassung der Messempfindlichkeit an den konkret vorliegenden Bedarfsfall vorgenommen werden.

Weiterhin kann vorgesehen sein, dass die dritte Messeinheit zur Erfassung elektromagnetischer Strahlung von Umgebungslicht in einem Wellenlängenbereich von 100 nm - 500 nm eingerichtet ist. Insbesondere kann die dritte Messeinheit zur Erfassung von UV-Licht (UV-A, UV-B, UV-C) eingerichtet sein, also zur Erfassung von elektromagnetischer Strahlung in einem Wellenlängenbereich von 100 nm - 380 nm. Die zuverlässige Erfassung von Umgebungslicht ist ein entscheidender Faktor zur Vermeidung von Fehlalarmen. Da bestimmte feuerartige Erscheinungen elektromagnetische Strahlung im Wellenlängenbereich des Umgebungslichts emittieren und die erste Messeinheit in diesem Bereich eine relativ hohe Messempfindlichkeit aufweist, kann in bestimmten Fällen von erfasstem Umgebungslicht ein Fehlalarm ausgelöst werden. Um dies zu vermeiden, ist die Detektion von Umgebungslicht mittels eines auf dessen Erfassung optimierten Umgebungslichtsensors (dritte Messeinheit) von enormer Relevanz zur Fehlalarmvermeidung. Die von der dritten Messeinheit erfassten Messdaten können somit auf das Vorliegen von Umgebungslicht geprüft werden. Wird dies bejaht, kann entweder bereits das Anpassungskriterium erfüllt sein (das qualitative Vorliegen von Umgebungslicht kann ein Anpassungskriterium sein) oder diese Positivfeststellung wird allein oder in Kombination mit weiteren Mess- und/oder Kenndaten auf das Vorliegen eines anderweitig definierten Anpassungskriteriums überprüft. Im Falle, dass das Vorliegen von Umgebungslicht qualitativ nachgewiesen wird, kann beispielsweise veranlasst werden, dass die erste, im Bereich des Umgebungslichts ebenfalls selektive, Messeinheit in einen Standby-Modus oder in einen ausgeschalteten Zustand gebracht wird (es wird also ein Betriebsparameter betreffend den Betriebszustand angepasst).

Weiterhin kann vorgesehen sein, dass die zur Messung der Medien-spezifischen oder Umgebungs-spezifischen Messdaten eingerichtete Sensoreinheit eine Drucksensoreinheit, eine Dichtesensoreinheit, eine Temperatursensoreinheit, eine Feuchtigkeitssensoreinheit, eine Sensoreinheit zur Messung einer Partikelkonzentration, eine Sensoreinheit zur Messung einer Gaskonzentration oder eine Anordnung aus mehreren der vorgenannten Sensoreinheiten ist.

Die mit der Sensoreinheit ermittelbaren Parameter können also einen Druck, eine Dichte, eine Temperatur, einen Feuchtigkeitswert, eine Partikelkonzentration oder eine Gaskonzentration des Mediums oder der Umgebung des Mediums betreffen. Die genannten Parameter können die Wahrscheinlichkeit für das Vorliegen einer feuerartigen Erscheinung in dem Medium oder der Umgebung des Mediums beeinflussen. Ein erhöhter Druck kann beispielsweise die Partikelbewegung verstärken, eine hohe Temperatur kann als solche zur Zündung eines Zündinitials beitragen, hohe Partikelkonzentrationen können die Stoßkontakte zwischen den Partikeln erhöhen und als Brandbeschleuniger wirken, hohe Gaskonzentrationen können (je nach Art des Gases) die Explosionsgefahr erhöhen, eine geringe Feuchtigkeit kann ebenfalls die Brand- oder Explosionsgefahr erhöhen. Entsprechend kann die Erfassung dieser konkret in dem Medium oder der Umgebung vorliegenden Bedingungen von hoher Bedeutung für die Einschätzung der Gefahrenrelevanz einer erfassten feuerartigen Erscheinung sein. Weisen die erfassten Medien-spezifischen oder Umgebungs-spezifischen Messdaten eher auf eine geringfügige Brand- oder Explosionsauslösungsgefahr für eine erfasste feuerartige Erscheinung hin (z.B. bei einer geringen Partikelkonzentration von Partikeln des Mediums), so kann die Erfassung einer feuerartigen Erscheinung als ungefährlich klassifiziert werden. Im Gegensatz dazu kann eine feuerartige Erscheinung - bei entsprechendem Vorliegen bestimmter Medien-spezifischer oder Umgebungs-spezifischer Bedingungen - als gefährlich hinsichtlich einer Brand- oder Explosionsauslösung eingestuft werden. Gleichsam kann bei Vorliegen bestimmter Medien-spezifischer oder Umgebungs-spezifischer Bedingungen (erfassbar über die dritte Messeinheit) eine Anpassung der Messempfindlichkeit oder eines Betriebsparameters einer der Messeinheiten erforderlich oder sinnvoll sein.

Nach einer weiteren Ausgestaltung einer mit der Erfindung vorgeschlagenen Vorrichtung kann vorgesehen sein, dass die Medien-spezifischen oder Umgebungs-spezifischen Messdaten in dem Medium oder in der Umgebung des Mediums von der Sensoreinheit gemessene Messdaten sind. Durch die Miteinbeziehung "gemessener" Medien-spezifischer oder Umgebungs-spezifischer Messdaten, können konkret und aktuell in dem Reservoir vorliegende Bedingungen bei der Überprüfung auf die Erfüllung eines Anpassungskriteriums unmittelbar berücksichtigt werden. So kann bereits durch jene zu einem bestimmten Zeitpunkt in dem Reservoir vorliegenden Bedingungen eine Anpassung der Messempfindlichkeit (z.B. aufgrund einer geringen Partikelkonzentration) oder eines Betriebsparameters erforderlich sein. Ferner kann auf Basis dieser Daten auch ein Anpassungskriterium ermittelt bzw. festgelegt werden. Auch bei der Gefahrenbewertung einer erfassten feuerartigen Erscheinung können somit konkret in dem Reservoir vorliegende Bedingungen berücksichtigt werden.

Weiterhin kann vorgesehen sein, dass die Medien-spezifischen oder Umgebungs-spezifischen Kenndaten in einer Datenbank hinterlegte Kenndaten sind, und insbesondere einen Druck, eine Dichte, eine Temperatur, einen Feuchtigkeitswert, eine Partikelkonzentration oder eine Gaskonzentration des Mediums oder der Umgebung des Mediums betreffen. Je nach Art des in dem Reservoir vorliegenden Mediums oder damit einhergehenden Rahmenbedingungen kann beispielsweise simuliert werden, ob eine hinreichende Wahrscheinlichkeit für die Notwendigkeit der Anpassung eines Betriebsparameters oder einer Messempfindlichkeit einer der Messeinheiten besteht. Entsprechend kann ein bestimmter Wahrscheinlichkeitswert (z.B. für das Vorliegen einer Strahlungsabsorption durch organische Partikel) oder eine simulativ zu erreichende Bedingung als Anpassungskriterium definiert werden, bei dessen Erfüllung eine Anpassung einer Messempfindlichkeit oder eines Betriebsparameters einer der Messeinheiten vollzogen wird.

Auch können die Medien-spezifischen oder Umgebungs-spezifischen Kenndaten bestimmte Steuerparameter einer das medienbeladene - oder mediendurchströmte Reservoir aufweisende Maschineneinrichtung (z.B. einer Anlage) betreffen. Sofern eine Änderung bezüglich eines Medien-spezifischen oder Umgebungs-spezifischen Kenndatums oder eines Steuerparameters als Medien-spezifischem oder Umgebungs-spezifischem Kenndatum (z.B. in einer Maschineneinrichtung) eintritt, die z.B. aus einem Medienwechsel, einem geänderten Betriebsparameter in der Maschineneinrichtung oder dergleichen resultiert, kann dies im Wege einer manuellen oder automatisierten Anpassung der Messempfindlichkeit oder von Betriebsparametern einer der Messanordnung zugehörigen Mess- bzw. Sensoreinheit(en) berücksichtigt werden, und einen intelligenten Anlernprozess bereitstellen. In Folge einer Änderung bezüglich eines Medien-spezifischen oder Umgebungs-spezifischen Kenndatums oder eines Steuerparameters als Medien-spezifischem oder Umgebungs-spezifischem Kenndatum (z.B. durch Anpassung von Steuerparametern der Maschineneinrichtung) kann beispielsweise eine Meldung ausgegeben werden, die eine automatisierte oder manuelle Neukalibrierung bzw. einen Anlernprozess der Messanordnung initiiert. Die erfindungsgemäße Vorrichtung kann also "intelligent" mit anderen Messeinheiten, Intelligenzen, Maschinen etc. interagieren. Dazu kann die Vorrichtung entsprechende Kommunikations- und Datenverarbeitungsmittel aufweisen.

Weiterhin kann vorgesehen sein, dass das Anpassungskriterium ein vorgegebener Absolutwert oder ein vorgegebener Wertebereich ist, wobei der Absolutwert oder der Wertebereich bezogen ist auf einen Druck, eine Dichte, eine Temperatur, eine Luftfeuchtigkeit, eine Partikelkonzentration, oder eine Gaskonzentration, oder dass mehrere der vorstehend genannten Parameter ein kombiniertes Anpassungskriterium bilden. Unter der "Vorgabe" eines Wertes kann eine nutzerseitige Vorgabe oder eine rechnerische bzw. algorithmische Wertermittlung verstanden werden. In vielen Fällen ist die Ableitung einer Notwendigkeit für eine Messempfindlichkeitsanpassung oder eine Betriebsparameteranpassung auf Basis von reinen Absolutwerten (z.B. aufgrund von in einem dynamischen System natürlicherweise vorliegenden Schwankungen) nicht möglich. Der Rückgriff auf Wertebereiche (z.B. im Sinne von Toleranzbereichen) ist daher häufig das Mittel der Wahl, um den Schwankungen des Systems (z.B. variierende Temperaturen, Drücke, Partikelkonzentrationen oder dergleichen) zu kompensieren.

Weiterhin kann vorgesehen sein, dass das Prüfmittel dazu eingerichtet ist, ein mit der Sensoreinheit gemessenes Medien-spezifisches oder Umgebungs-spezifisches Messdatum respektive ein hinterlegtes Medien-spezifisches oder Umgebungs-spezifisches Kenndatum mit dem Anpassungskriterium zu vergleichen, und zu prüfen, ob das Messdatum respektive das Kenndatum mit dem vorgegebenen Absolutwert übereinstimmt oder innerhalb des vorgegebenen Wertbereichs liegt, wobei im Falle einer diesbezüglichen Positivfeststellung das Anpassungskriterium erfüllt ist, und das Steuermittel dazu eingerichtet ist, zu veranlassen,
a. einen Betriebsparameter zumindest einer der Messeinheiten anzupassen, wobei der Betriebsparameter insbesondere ein Betriebsstatus im Sinne eines Online-, Offline-, oder Stand-By Status ist, und/oder
b. die Messempfindlichkeit der ersten und/oder zweiten Messeinheit anzupassen, insbesondere abzuschwächen oder zu erhöhen, und/oder
c. einen bezüglich der ersten und/oder zweiten Messeinheit hinterlegten Schwellwert zur Auslösung eines Gefahrensignals anzupassen, insbesondere zu verringern oder zu erhöhen.

Im Falle einer Positivfeststellung kann seitens des Prüfmittels ein Befehlssignal an das Steuermittel übermittelt werden, woraufhin eine oder mehrere der vorgenannten Anpassungen vorgenommen werden können.

Wird beispielsweise festgestellt, dass ein oder mehrere gemessene Medien-spezifische oder Umgebungs-spezifische Messdaten respektive ein oder mehrere hinterlegte Medien-spezifische oder Umgebungs-spezifische Kenndaten mit einem oder mehreren vorgegebenen Absolutwert(en) übereinstimmen oder innerhalb eines oder mehrerer vorgegebener Wertebereiche liegen, so kann ermittelt werden, ob eine Anpassung eines Betriebsparameters die Wahrscheinlichkeit von Fehlalarmen verringern oder die Messpräzision erhöhen kann. In bestimmten Fällen kann durch eine Anpassung eines Betriebsparameters oder einer Anpassung einer Messempfindlichkeit überhaupt erst eine Erfassung einer feuerartigen Erscheinung ermöglicht werden. Zusätzlich oder alternativ kann ermittelt werden, ob eine Messempfindlichkeitsanpassung der ersten und/oder zweiten Messeinheit erforderlich ist, beispielsweise um Fehlalarme zu vermeiden oder die Performance und/oder Messpräzision zu verbessern. Ferner kann zusätzlich oder alternativ ermittelt werden, ob ein bezüglich der ersten und/oder zweiten Messeinheit hinterlegter Schwellwert zur Auslösung eines Gefahrensignals angepasst, insbesondere verringert oder erhöht wird. Ein geringerer Schwellwert, führt zur schnelleren Auslösung eines Gefahrensignals, da die Auslöseschwelle schneller erreicht wird. Ein höherer Schwellwert führt zu einer späteren Auslösung eines Gefahrensignals, da der zu erreichende Schwellwert ein höheres Maß annimmt. Die Schwellwertanpassung kann auch an die Stelle der Messempfindlichkeitsanpassung treten. Nebst der Vermeidung von Fehlarmen kann durch die genannte Ausgestaltung gewährleistet werden, dass in jenem Falle, bei dem bestimmte Betriebs- und/oder Performance Parameter der Messanordnung nicht passend/optimal in Bezug auf eine das Reservoir beinhaltende Maschine oder Anlage angepasst bzw. eingestellt sind, dennoch eine zuverlässige Erkennung von feuerartigen Erscheinungen zu gewährleisten, beispielsweise durch die genannte Anpassung von Betriebsparametern, Schwellwerten oder Messempfindlichkeiten. Eine solche Anpassung kann als intelligenter Selbstlernprozess bezeichnet werden.

Weiterhin kann vorgesehen sein, dass das Prüfmittel dazu eingerichtet ist, von der dritten Messeinheit erfasste Messdaten auf das Vorliegen von Umgebungslicht, eine vorgegebene Umgebungslichtintensität oder einen vorgegebenen messdatenspezifischen Kennwert als Anpassungskriterium zu prüfen, wobei im Falle einer diesbezüglichen Positivfeststellung das Anpassungskriterium erfüllt ist, und das Steuermittel dazu eingerichtet ist, zu veranlassen,
a. die erste Messeinheit abzuschalten,
b. die Messempfindlichkeit der ersten Messeinheit abzuschwächen, oder
c. einen bezüglich der ersten Messeinheit hinterlegten Schwellwert zur Auslösung eines Gefahrensignals anzupassen, insbesondere zu erhöhen.

Im Falle einer Positivfeststellung kann seitens des Prüfmittels ein Befehlssignal an das Steuermittel übermittelt werden, woraufhin eine der vorgenannten Anpassungen vorgenommen werden können.

Im Falle des Vorliegens von Umgebungslicht kann eine Abschaltung der ersten Messeinheit (alternativ auch das Umschalten in einen Offline- oder Stand-By Status) vorteilhaft sein, da die erste Messeinheit im Wellenlängenbereich des Umgebungslichts messempfindlich ist. Um sodann einen durch das Umgebungslicht ausgelösten Fehlalarm zu vermeiden, kann die erste Messeinheit zumindest temporär abgeschaltet werden. Nachteilig ist dabei jedoch, dass sodann von der ersten Messeinheit auch keine feuerartigen Erscheinungen mehr erfasst werden können. Entsprechend kann auch die Messempfindlichkeit der ersten Messeinheit verringert (abgeschwächt werden), sodass das Umgebungslicht einen vorgegebenen Schwellwert zur Gefahrensignalauslösung nicht überschreitet. Letztlich kann vorgesehen sein, einen bezüglich der ersten Messeinheit hinterlegten Schwellwert zur Auslösung eines Gefahrensignals zu erhöhen. Der Schwellwert kann sich beispielsweise auf die Signalintensität der erfassten elektromagnetischen Strahlung bei einer bestimmten Wellenlänge oder in einem bestimmten Wellenlängenbereich beziehen. Somit kann gewährleistet werden, dass signalintensive feuerartige Erscheinungen, trotz des Vorliegens von Umgebungslicht, mit der ersten Messeinheit erfasst werden können, ein Gefahrensignal jedoch nur dann ausgelöst wird, sobald ein bestimmter Signalintensitätswert (dieser kann den Schwellwert bereitstellen) überschritten wird. Das Umgebungslicht von geringerer Intensität wird somit nicht berücksichtigt.

Ferner kann der zeitliche Verlauf des von der ersten und/oder zweiten Messeinheit erfassten Messsignals aus Vorliegen eines messdatenspezifischen Kennwerts geprüft werden. So zeigen feuerartige Erscheinungen in Bezug auf ihre Signalform in der Regel individuell unterscheidbare Signalpeaks, während sich die zeitlich erfassten Signale von stationärem (d.h. konstantem) Umgebungslicht diesbezüglich nicht unterscheiden lassen. Auch dies kann ein Indikator für das Vorliegen von Umgebungslicht sein. Dieses Prinzip kann sich auch die dritte Messeinheit (der Umgebungslichtsensor) zu Nutzen machen.

Weiterhin kann vorgesehen sein, dass das Prüfmittel dazu eingerichtet ist, von der ersten und/oder zweiten Messeinheit erfasste Messdaten auf die Erfüllung eines messdatenspezifischen Kriteriums als Anpassungskriterium zu prüfen, wobei im Falle einer diesbezüglichen Positivfeststellung das Anpassungskriterium erfüllt ist, und das Steuermittel dazu eingerichtet ist,
a. einen Betriebsparameter zumindest einer der Messeinheiten anzupassen, wobei der Betriebsparameter insbesondere ein Betriebsstatus im Sinne eines Online-, Offline-, oder Stand-By Status ist, und/oder
b. die Messempfindlichkeit der ersten und/oder zweiten Messeinheit anzupassen, insbesondere abzuschwächen oder zu erhöhen, und/oder
c. einen bezüglich der ersten und/oder zweiten Messeinheit hinterlegten Schwellwert zur Auslösung eines Gefahrensignals anzupassen, insbesondere zu verringern oder zu erhöhen.

Im Falle einer Positivfeststellung kann seitens des Prüfmittels ein Befehlssignal an das Steuermittel übermittelt werden, woraufhin eine oder mehrere der vorgenannten Anpassungen vorgenommen werden können.

Als messdatenspezifisches Kriterium können beispielsweise eine bei einer bestimmten Wellenlänge vorliegende Signalintensität, eine über einen vorgegebenen Wellenlängenbereich integrierte bzw. gemittelte Signalintensität, eine mit einem Gewichtungsfaktor gewichtete Signalintensität, ein Kurvenmerkmal einer wellenlängenabhängigen Signalintensitätskurve (Abszisse: Wellenlänge; Ordinate: Signalintensität) oder weitere aus den Messdaten extrahierbare oder berechenbare Parameter verstanden werden.

Eine Anpassung eines Betriebsparameters kann die Wahrscheinlichkeit von Fehlalarmen verringern oder die Messpräzision erhöhen. In bestimmten Fällen kann durch eine Anpassung eines Betriebsparameters oder die Anpassung einer Messempfindlichkeit überhaupt erst eine Erfassung einer feuerartigen Erscheinung ermöglicht werden. Angenommen die seitens einer feuerartigen Erscheinung abgegebene elektromagnetische Strahlung kann von der zweiten Messeinheit zwar grundsätzlich erfasst werden, die abgegebene Strahlung wird jedoch zuvor z.B. durch organische Partikel im Reservoir absorbiert. In einem solchen Fall führt eine wellenlängenspezifische Detektion mittels der zweiten Messeinheit zu falschen (oder gar keinen) Ergebnissen. Durch eine Erhöhung der Messempfindlichkeit der ersten Messeinheit, kann die in dem der zweiten Wellenlängenbereich nur gering vorliegende Sensitivität der ersten Messeinheit durch eine Verstärkung der Messempfindlichkeit erhöht werden. Somit wird ermöglicht, dass die erste Messeinheit außerhalb ihres wellenlängenbezogenen Sensitivitätsoptimums feuerartige Erscheinungen erfassen kann. Die erste Messeinheit übernimmt in einem solchen Fall also die Stellung der zweiten Messeinheit bzw. kompensiert ihre Minder-Performance. Ein solches Prozedere ist vergleichbar mit einer offresonanten Messung unter hoher Signalamplifikation. Zusätzlich oder alternativ kann geprüft werden, ob eine Messempfindlichkeitsanpassung der ersten und/oder zweiten Messeinheit erforderlich ist, beispielsweise um Fehlalarme zu vermeiden oder die Performance und/oder Messpräzision zu verbessern. Ferner kann zusätzlich oder alternativ ermittelt werden, ob ein bezüglich der ersten und/oder zweiten Messeinheit hinterlegter Schwellwert zur Auslösung eines Gefahrensignals angepasst, insbesondere verringert oder erhöht werden soll. Wie erwähnt führt ein geringerer Schwellwert zur schnelleren Auslösung eines Gefahrensignals, da die Auslöseschwelle schneller erreicht wird. Ein höherer Schwellwert führt zu einer späteren (verzögerten) Auslösung eines Gefahrensignals. Die Schwellwertanpassung kann auch an die Stelle der Messempfindlichkeitsanpassung treten.

Ferner kann auf Basis von mit der ersten und/oder zweiten Messeinheit erfassten Messdaten das qualitative (oder in Bezug auf eine Signalintensität quantitative) Vorliegen von Umgebungslicht ermittelt werden, beispielsweise anhand des zeitlichen Signalverlaufs bzw. der Peakform. Denn während feuerartige Erscheinungen (z.B. Funken) stets eine sich in der Zeitdomäne verändernde Peakform aufweisen, ist die Peakform von stationärem Umgebungslicht unveränderlich bzw. konstant. Entsprechend kann aus dem zeitlichen Signalverlauf der mit der ersten und/oder zweiten Messeinheit erfassten Messdaten auf das Vorliegen von Umgebungslicht geschlossen werden. Entsprechend kann eine qualitative Feststellung (aber auch quantitative Intensitätsbestimmung) von Umgebungslicht ein Anpassungskriterium darstellen.

Bei der erfindungsgemäß vorgeschlagenen Vorrichtung ist vorgesehen, dass das Prüfmittel dazu eingerichtet ist, von der ersten und/oder zweiten Messeinheit erfasste Messdaten auf das Vorliegen einer Strahlungsabsorption der von einer feuerartigen Erscheinung abgegebenen elektromagnetischen Strahlung durch das Medium als Anpassungskriterium zu prüfen, wobei im Falle einer diesbezüglichen Positivfeststellung das Anpassungskriterium erfüllt ist, und das Steuermittel dazu eingerichtet ist, zu veranlassen,
a. die zweite Messeinheit abzuschalten, oder
b. die Messempfindlichkeit der zweiten Messeinheit abzuschwächen und/oder
c. die Messempfindlichkeit der ersten Messeinheit zu erhöhen, und/oder
d. einen bezüglich der ersten Messeinheit hinterlegten Schwellwert zur Auslösung eines Gefahrensignals anzupassen, insbesondere zu verringern.

Die Kenntnis des Auftretens von Absorptionsphänomenen, bei denen elektromagnetische Strahlung einer feuerartigen Erscheinung bei einer bestimmten Wellenlänge oder in einem bestimmten Wellenlängenbereich absorbiert wird, kann die sichere Erkennung von gefährlichen Zündinitialen (trotz Strahlungsabsorption) mit einer erfindungsgemäßen Vorrichtung (bzw. einem erfindungsgemäßen Verfahren) ermöglichen. Die Kenntnis bzw. Wahrscheinlichkeit für das Vorliegen einer solchen Strahlungsabsorption kann das - eine Messempfindlichkeitsanpassung (insbesondere in der ersten Messeinheit) bedingende (zu erfüllende) - Anpassungskriterium darstellen. Auf das Vorliegen einer solchen Strahlungsabsorption kann auf Basis von mit der Messanordnung erfassten Messdaten (z.B. aus den Intensitätsdaten der mit der ersten und zweiten Messeinheit erfassten Messdaten) geschlossen werden. Insbesondere durch eine Erhöhung der Messempfindlichkeit der ersten Messeinheit kann die im Spektralbereich der zweiten Messeinheit absorbierte elektromagnetische Strahlung einer feuerartigen Erscheinung beispielsweise durch eine wellenlängenverschobene Erfassung mittels der ersten Messeinheit (off-resonant) erfasst werden. Ferner ist möglich, dass die feuerartige Erscheinung zwar im Wesentlichen elektromagnetische Strahlung im langwelligeren Bereich abgibt (dieser Strahlungsanteil kann getreu dem vorliegenden Beispiel z.B. durch organische Partikel absorbiert werden), jedoch trotzdem Strahlungsanteile im kurzwelligeren Spektralbereich aufweist, die sodann zuverlässig von der ersten Messeinheit erfasst werden können. Gleiches kann auch durch eine zusätzlich oder alternativ vorgesehene Schwellwertverringerung in der ersten Messeinheit zur Auslösung eines Gefahrensignals erreicht werden. Im Falle einer solchen Strahlungsabsorption kann auch ein Abschalten der zweiten Messeinheit oder zumindest eine Abschwächung (Dämpfung) der Messempfindlichkeit der zweiten Messeinheit vorgenommen werden.

Erfindungsgemäß ist ein Berechnungsmittel vorgesehen, das Bestandteil des Prüfmittels ist oder mit diesem signaltechnisch verbunden ist, wobei das Berechnungsmittel dazu eingerichtet ist, auf Basis von hinterlegten Mediums- oder Umgebungs-spezifischen Kenndaten einen Wahrscheinlichkeitswert für das Vorliegen einer Strahlungsabsorption der von einer feuerartigen Erscheinung abgegebenen elektromagnetischen Strahlung durch das Medium zu berechnen, wobei das Anpassungskriterium ein vorgegebener Wahrscheinlichkeitswert oder ein Wahrscheinlichkeitswertebereich ist. Wie bereits vorangehend beschrieben, kann für ein bestimmtes Medium in einem Reservoir (von bekannter Ausgestaltung und Dimensionierung) bei Kenntnis entsprechender Randbedingungen die Wahrscheinlichkeit für das Auftreten einer Strahlungsabsorption im langwelligeren zweiten Wellenlängenbereich simulativ (durch das Berechnungsmittel) ermittelt werden. Die mit einer solchen Simulation ermittelten Daten oder Kenntnisse können sodann (gegebenenfalls in Kombination mit weiteren messtechnisch erfassten Messdaten oder hinterlegten Umgebungs- oder Mediums-spezifischen Kenndaten) auf die Notwendigkeit einer Anpassung eines Betriebsparameters oder einer Messempfindlichkeit geprüft werden.

Erfindungsgemäß ist das Prüfmittel dazu eingerichtet, zu prüfen, ob der berechnete Wahrscheinlichkeitswert mit dem vorgegebenen Wahrscheinlichkeitswert übereinstimmt oder in dem vorgegebenen Wahrscheinlichkeitswertebereich liegt, wobei im Falle einer diesbezüglichen Positivfeststellung das Anpassungskriterium erfüllt ist und das Steuermittel dazu eingerichtet ist, zu veranlassen,
a. die zweite Messeinheit abzuschalten, oder
b. die Messempfindlichkeit der zweiten Messeinheit abzuschwächen und/oder
c. die Messempfindlichkeit der ersten Messeinheit zu erhöhen, und/oder
d. einen bezüglich der ersten Messeinheit hinterlegten Schwellwert zur Auslösung eines Gefahrensignals anzupassen, insbesondere zu verringern.

Im Falle einer Positivfeststellung kann seitens des Prüfmittels ein Befehlssignal an das Steuermittel übermittelt werden, woraufhin eine oder mehrere der vorgenannten Anpassungen vorgenommen werden können. Die Schwellwertanpassung kann auch an die Stelle der Messempfindlichkeitsanpassung treten.

Weiterhin kann vorgesehen sein, dass der ersten und zweiten Messeinheit ein gemeinsames Amplifikationsmodul zugeordnet ist, oder dass der ersten und zweiten Messeinheit jeweils separate Amplifikationsmodule zugeordnet sind, wobei die Messempfindlichkeit mit dem gemeinsamen oder den separaten Amplifikationsmodulen anpassbar ist. Dabei kann vorgesehen sein, dass das gemeinsame Amplifikationsmodul oder die separaten Amplifikationsmodule signaltechnisch mit dem Steuermittel verbunden sind. Gleichsam können die Amplifikationsmodule mit den Messeinheiten signaltechnisch verbunden sein. Die Amplifikationsmodule können beispielsweise in Form von Signalverstärkern oder Vorverstärkern (Preamplifier, Preamp) ausgebildet sein, wobei diese sowohl analoger als auch digitaler Natur sein können. Unter einem Amplifikationsmodul ist zu verstehen, dass Messignale derart verstärkt werden, dass diese in einer nachfolgenden Stufe in einer verarbeitbaren oder gewünschten Signalverstärkung vorliegen.

Weiterhin kann vorgesehen sein, dass die Messanordnung und das Steuermittel in einem gemeinsamen Sensorgehäuse angeordnet sind. Durch die Anordnung in einem gemeinsamen Gehäuse wird eine kompakte Bauweise der Vorrichtung ermöglicht und ferner der Fertigungsaufwand geringgehalten. Auch der Installations- und Montageaufwand der Vorrichtung an dem zu überwachenden Reservoir wird dadurch reduziert. Bei dem Gehäuse kann es sich um ein Metallgehäuse oder ein Kunststoffgehäuse handeln.

Weiterhin kann vorgesehen sein, dass das Prüfmittel eine Recheneinheit ist oder eine auf einer Recheneinheit ausgeführte Routine ist, wobei die Recheneinheit signaltechnisch mit einer Alarmeinrichtung verbindbar ist. Nebst der Ausführung des Prüfmittels in Form einer Routine, kann das Prüfmittel in Form eines Programms, einer Software, einer Applikationssoftware (App), eines Algorithmus etc. ausgeführt sein. Ein als Recheneinheit ausgebildetes Prüfmittel kann auf einer Rechenplatine ausgebildet sein und elektrische Schaltungen sowie elektrische Funktionsbauteile umfassen.

Weiterhin kann vorgesehen sein, dass die Recheneinheit in dem Sensorgehäuse angeordnet ist oder eine extern zu dem Sensorgehäuse angeordnete Recheneinheit ist. Eine Anordnung der Recheneinheit in dem Sensorgehäuse (z.B. in Form einer Platine) kann Bauraum sparen und versieht die Vorrichtung unmittelbar mit einer logischen Intelligenz. Eine externe Anordnung der Recheneinheit ermöglicht den Rückgriff auf eine größere Rechenkapazität, sodass auch kompliziertere Auswertungen, Bewertungen, Prüfungen etc. ausführbar sind. Im Falle einer externen Anordnung der Recheneinheit kann die Recheneinheit ein Server oder ein Rechenzentrum sein. Die Recheneinheit kann aus einer Mehrzahl von miteinander verschalteten oder in Signalverbindung stehenden Rechnern gebildet sein. Bei externer Anordnung der Recheneinheit sind in dem Gehäuse der Vorrichtung geeigneten Sende- und Empfangsmittel (Kommunikationsmittel) vorgesehen, vermöge dessen ein Signal- und Datenaustausch mit der Recheneinheit ermöglicht ist. In diesem Fall können die Sende- und Empfangsmittel signaltechnisch mit einer in dem Gehäuse angeordneten Sub-Recheneinheit verbunden sein.

Eine Vorrichtung gemäß der vorliegenden Offenbarung kann über eine kabelgebundene Energieversorgung verfügen. Gleichsam kann eine autarke Energieversorgung der Vorrichtung vorgesehen sein, z.B. in Form eines Akkus oder einer Batterie. Darunter kann auch eine Anordnung von Akkus oder Batterien zu verstehen sein. Entsprechend kann die Vorrichtung in dem Gehäuse oder an einem Gehäuseteil eine Energieversorgungseinheit aufweisen, welche die genannten Akku(s) oder Batterie(n) aufweist. Auch kann die Energieversorgungseinheit wiederaufladbar ausgebildet sein. In einer vorteilhaften Ausgestaltung kann die Energieversorgungseinheit kontaktlos aufgeladen werden, z.B. durch induktives Laden. Auch ein Solarmodul kann mit der Energieversorgungseinheit verknüpft sein und die zum Betrieb benötigte elektrische Energie bereitstellen.

Weiterhin kann vorgesehen sein, dass die Messanordnung zur Anordnung außerhalb des Reservoirs ausgebildet ist, wobei die der Messanordnung zugehörige erste, zweite und/oder dritte Messeinheit, und/oder die Sensoreinheit dazu eingerichtet sind, durch eine zumindest teilweise optisch transparente Einrichtung des Reservoirs hindurch zu messen. Die optisch transparente Einrichtung kann dabei Teil des Gehäuses sein, sodass das Gehäuse der Vorrichtung in eine Öffnung des Reservoirs eingesetzt werden kann und die Öffnung dabei verschließt. Auch kann in einer Wandung des Reservoirs eine optisch transparente Einrichtung vorgesehen sein, im Bereich welcher das Gehäuse angeordnet wird. Zur Befestigung an dem Reservoir können an dem Gehäuse der Vorrichtung Befestigungsmittel vorgesehen sein, die der Vorrichtung mechanischen Halt an der Wandung des Reservoirs verleihen.

Weitere Merkmale und Vorteile der Erfindung ergeben sich aus der folgenden Beschreibung nicht einschränkend zu verstehender Beispiele, welche im Folgenden unter Bezugnahme auf die Zeichnungen näher erläutert werden. In dieser Zeichnung zeigen schematisch:
- Fig. 1: ein mediendurchströmtes Reservoir mit einer feuerartigen Erscheinung;
- Fig. 2: eine Illustration des grundlegenden Funktionsprinzips einer Vorrichtung beim Einsatz bei einem mediendurchströmten Reservoirs nach Fig. 1;
- Fig. 3: eine Darstellung von einer Vorrichtung zugehörigen Komponenten und deren Zusammenwirken;
- Fig. 4: eine Illustration eines Löschsystems beim Einsatz bei dem mediendurchströmten Reservoirs nach Fig. 1;
- Fig. 5: in einer schematisch dargestellten Zeitschiene den Ablauf eines Verfahrens.

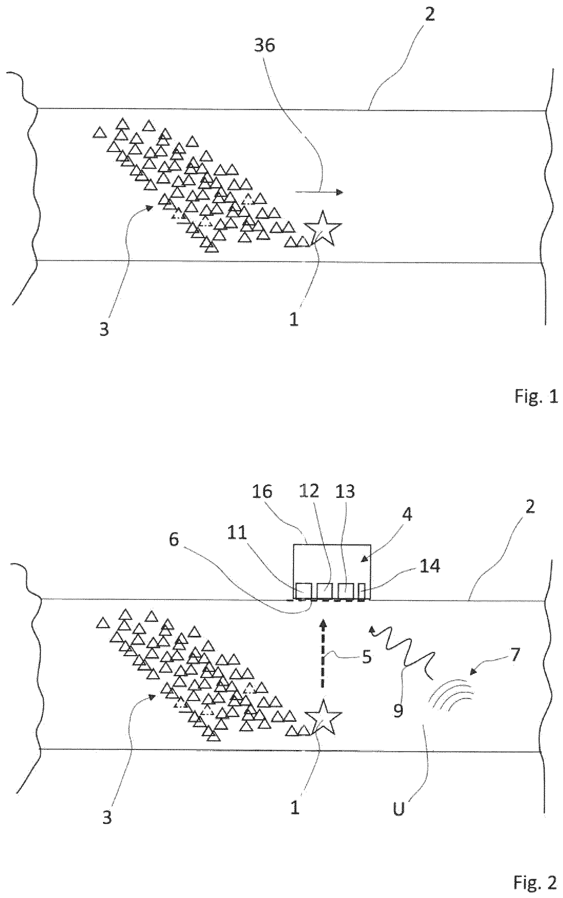

In der Figur 1 ist ein mediendurchströmtes Reservoir 2 als Bestandteil einer übergeordneten Produktions- oder Verarbeitungsanlage in einem der in der einleitenden Beschreibung aufgeführten Industriezweige dargestellt. Das Reservoir 2 ist als Kanal (beispielsweise rohrförmig) ausgebildet, entlang dessen ein Medium 3 befördert wird, nämlich entlang der Förderrichtung 36. Bei dem Medium 3 handelt es sich um einen Feststoff, der - wie anhand der Vielzahl von dargestellten Dreieckformen illustriert - partikelförmig vorliegt. Die Beförderung erfolgt auf Basis der Schwerkraft (z.B. beim Transport in Vertikalrichtung wie in einem Fallrohr), alternativ mechanisch oder pneumatisch vermittelt. Kenntlich gemacht ist ferner, dass in dem mediendurchströmten Reservoir 2 feuerartige Erscheinungen 1 auftreten können (schematisch illustriert durch eine Sternform). Als feuerartige Erscheinungen 1 werden vorliegend insbesondere Funken, Flammen, Glut, Glutnester etc. verstanden, die unter bestimmten Umständen als Zündinitiale eines Feuers oder gar einer Explosion wirken.

Um derartige feuerartige Erscheinungen 1 frühzeitig zu erkennen und den entsprechenden Folgen entgegenzuwirken, kann auf eine Vorrichtung zurückgegriffen werden, die auch als intelligenter Funkenmelder bezeichnet werden kann. Die Figur 2 illustriert das grundlegende Funktionsprinzip einer Vorrichtung. Wie dort zu erkennen, umfasst die Vorrichtung ein Sensorgehäuse 16 in welchem eine Messanordnung 4 angeordnet ist. Die Messanordnung 4 ist zur Erfassung von Messdaten ausgebildet und umfasst eine erste, zweite und dritte Messeinheit 11, 12, 13 sowie eine optionale Sensoreinheit 14. Die erste Messeinheit 11 ist dabei zur Erfassung von seitens der feuerartigen Erscheinung 1 abgegebener elektromagnetischer Strahlung 5 (illustriert durch einen gestrichelten Pfeil) in einem ersten Wellenlängenbereich ausgebildet. Der erste Wellenlängenbereich erstreckt sich von 190 nm - 1100 nm, und bevorzugt von 430 nm - 1100 nm, wobei das Messempfindlichkeits-Optimum der ersten Messeinheit 11 in einem Wellenlängenbereich von ungefähr 780 nm, vorzugsweise genau bei 780 nm liegt. Die zweite Messeinheit 12 ist zur Erfassung von seitens der feuerartigen Erscheinung 1 abgegebener elektromagnetischer Strahlung 5 in einem zweiten Wellenlängenbereich ausgebildet. Der zweite Wellenlängenbereich liegt bei 1000 nm - 3100 nm, und erstreckt sich bevorzugt von 1650 nm - 3100 nm. Damit ist der zweite Wellenlängenbereich in einem langwelligeren Spektralbereich angesiedelt.

Die dritte Messeinheit 13 ist hingegen zur Erfassung elektromagnetischer Strahlung 9 von Umgebungslicht 7 in einem Wellenlängenbereich von 400 nm - 500 nm eingerichtet. Umgebungslicht 7 kann in das Reservoir 2 (bzw. den Kanal) eintreten durch Öffnungen im Reservoir oder eines zugehörigen Kanalsystems. Auch Maschinen- oder Anlagenkomponenten kann eine Lichterzeugung ausgehen, die in dem Reservoir 2 für ein Hintergrundlicht bzw. Umgebungslicht 7 sorgt. Ferner ist im Bereich der an einer Wandung des Reservoirs 2 platzierten Vorrichtung bzw. Sensoranordnung 4 eine (zumindest teilweise) optisch transparente Einrichtung 6 vorgesehen, z.B. eine Scheibe, durch welche Strahlung bestimmter Wellenlängen oder bestimmter Wellenlängenbereiche hindurchtreten kann. In diesem Falle kann gegebenenfalls auch Umgebungslicht von außen durch die Einrichtung 6 in den Innenraum des Reservoirs 2 eindringen.

Die optional in der Messanordnung 4 vorgesehene Sensoreinheit 14 ist dazu eingerichtet, Medien-spezifische oder Umgebungs-spezifische Messdaten zu erfassen, beispielsweise einen Druck, eine Dichte, eine Temperatur, einen Feuchtigkeitswert, eine Partikelkonzentration oder eine Gaskonzentration des Mediums 3 oder der Umgebung U des Mediums 3. Diese mit der Sensoreinheit 14 erfassbaren Messdaten werden gegebenenfalls bei der Gefahrenbewertung einer mit den Messeinheiten 11, 12 erfassten feuerartigen Erscheinung 1 mitberücksichtigt. Gleichsam wird gegebenenfalls auch die Präsenz von mit der dritten Messeinheit 13 erfassbarem Umgebungslicht 7 bei der Gefahrenbewertung mit einbezogen.

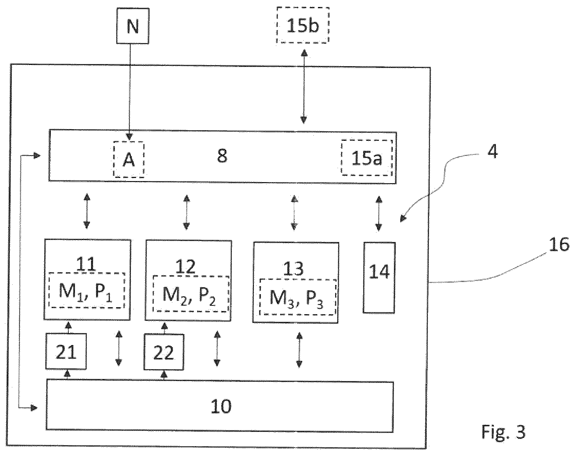

In der Figur 3 ist ein möglicher Aufbau einer Vorrichtung in einer - im Vergleich zur Fig. 2 - detaillierten Darstellung wiedergegeben. Zu erkennen ist, dass die Messeinheiten 11, 12, 13, sowie die optional vorgesehene Sensoreinheit 14 in einem gemeinsamen Gehäuse 16 angeordnet sind. Ferner ist in dem Gehäuse ein Prüfmittel 8 angeordnet, das dazu eingerichtet ist, zu einem aktuellen Zeitpunkt t_{A} auf Basis von mit der Messanordnung 4 erfassten Messdaten und/oder hinterlegten Mediums- oder Umgebungs-spezifischen Kenndaten zu prüfen, ob ein bestimmtes Anpassungskriterium A erfüllt ist. Das Prüfmittel 8 ist eine Recheneinheit und/oder eine auf einer Recheneinheit abgelegte Routine, Software oder ein Algorithmus. Das Anpassungskriterium A ist von einem Nutzer N extern vorgebbar, z.B. durch entsprechende Programmierung oder entsprechende Eingabemittel. Auch ist es möglich, dass das Anpassungskriterium A unter Einsatz der Recheneinheit ermittelt wird. Die erwähnten Mediums- oder Umgebungs-spezifischen Kenndaten können auf einer Datenbank 15a abgelegt sein, die Bestandteil des Prüfmittels 8 (der Recheneinheit) ist. Alternativ dazu sind die Mediums- oder Umgebungs-spezifischen Kenndaten auf einer externen Datenbank 15b abgelegt, wobei das Prüfmittel 8 über eine Signalverbindung (gekennzeichnet durch den Doppelpfeil) auf die Datenbank 15b zugreifen kann. Somit ist ein Datenaustausch zwischen Prüfmittel 8 und Datenbank 15b ermöglicht. Ferner ist in dem Gehäuse 16 ein Steuermittel 10 vorgesehen 8, das dazu eingerichtet ist, bei Erfüllung des Anpassungskriteriums A, eine Messempfindlichkeitsanpassung oder Betriebsparameteranpassung in der Messanordnung 4 zu veranlassen. Ein Befehl, wonach eine Messempfindlichkeitsanpassung oder Betriebsparameteranpassung zu erfolgen hat, wird dem Steuermittel 10 von dem Prüfmittel 8 übermittelt, nämlich über eine Signalverbindung (siehe den dargestellten Doppelpfeil). Das Prüfmittel 8 ist also signaltechnisch mit dem Steuermittel 10 verbunden. Entsprechend wird zu aktuellen Zeitpunkt t_{A} - sofern das Anpassungskriterium A erfüllt ist - eine Messempfindlichkeit M₁, M₂, M₃ oder ein Betriebsparameter P₁, P₂, P₃ zumindest einer der Messeinheiten 11, 12, 13 situationsadäquat angepasst. Dazu ist das Steuermittel 10 signaltechnisch mit den Messeinheiten 11, 12, 13 verbunden (siehe die dargestellten Doppelpfeile, welche die genannten Signalverbindungen repräsentieren). Entsprechend wird - sofern erforderlich - über das Steuermittel 10 eine Messempfindlichkeit M₁ und/oder ein Betriebsparameter P₁ in der ersten Messeinheit 11, eine Messempfindlichkeit M₂ und/oder ein Betriebsparameter P₂ in der zweiten Messeinheit 12, und/oder eine Messempfindlichkeit M₃ und/oder ein Betriebsparameter P₃ in der dritten Messeinheit 13 angepasst. Die Einstellung der ersten oder zweiten Messempfindlichkeit M1, M2 kann über der ersten und zweiten Messeinheit 11, 12 zugeordnete Amplifikationsmodule 21, 22 erfolgen, die mit dem Steuermittel 10 signaltechnisch verbunden sind. Gleichsam sind die Amplifikationsmodule 21, 22 mit den Messeinheiten 11, 12 signaltechnisch verbunden. Die Amplifikationsmodule 21, 22 können beispielsweise in Form von Signalverstärkern oder Vorverstärkern ausgebildet sein, wobei diese sowohl analoger oder digitaler Natur sein können. Ferner kann die Messempfindlichkeitsanpassung eine Anpassung eines bezüglich der ersten und/oder zweiten Messeinheit 11, 12 hinterlegten Schwellwerts zur Auslösung eines Gefahrensignals betreffen. Die Schwellwerte können in den Messeinheiten 11, 12 als solche, dem Prüfmittel 8, der Datenbank 15a, 15b oder dem Steuermittel 10 abgelegt sein. Die Betriebsparameter P₁, P₂, P₃ betreffen insbesondere einen Betriebsstatus der Messeinheiten M₁, M₂, M₃, insbesondere einen Online-Status (Erfassung von Messdaten möglich), einen Standby-Status (Energieversorgung im Standby, Aktivierung zur Erfassung von Messdaten erforderlich) oder einen Offline-Status (keine Energieversorgung bzw. ausgeschalteter Status, keine Erfassung von Messdaten möglich). Die Figur 2 gibt schließlich zudem zu erkennen, dass die Messeinheiten 11, 12, 13 sowie die Sensoreinheit 14 jeweils in einer Signalverbindung (vgl. die Doppelpfeile) mit dem Prüfmittel 8 stehen. Über diese Signalverbindungen werden die erfassten Messwerte an das Prüfmittel 8 weitergegeben werden. Die Messwerte können einer Vorprozessierung unterzogen werden, die bereits in den Messeinheiten 11, 12, 13 bzw. der Sensoreinheit 14 erfolgen kann. Ferner kann dies in dem Prüfmittel 8 erfolgen. In dem Prüfmittel 8 werden die Messdaten sodann ausgewertet und hinsichtlich der Erfüllung des Anpassungskriteriums A überprüft. Dazu können die Messdaten in ein gewünschtes Datenformat oder eine gewünschte Datendarstellung überführt werde. Ferner kann zur Überprüfung auf die Erfüllung des Anpassungskriteriums A eine Datenauswahl, eine Datenauswertung etc. erfolgen.

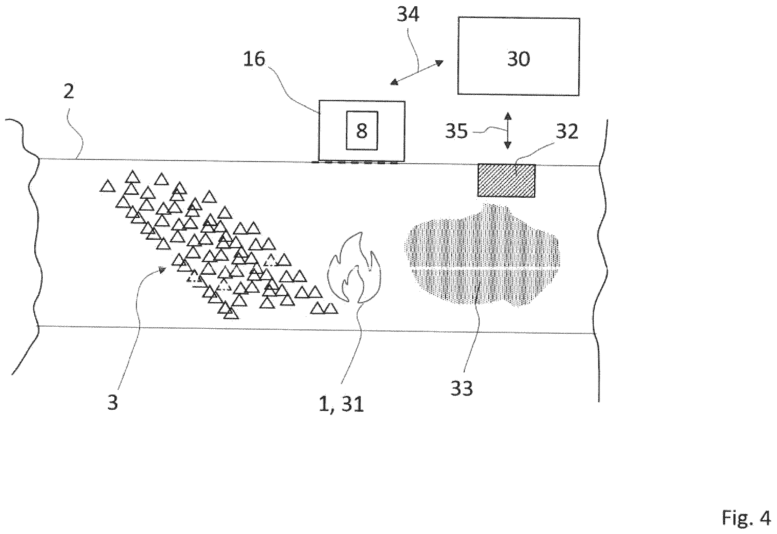

Die Figur 4 betrifft eine Darstellung eines Löschsystems beim Einsatz bei dem mediendurchströmten Reservoirs nach Fig. 1. In dem dargestellten Exempel ist aus der feuerartigen Erscheinung 1 eine Flamme 31 hervorgegangen. Mittels der in dem Gehäuse 16 angeordneten Messanordnung 4 (vgl. 3) wird - wie erwähnt - jene seitens der feuerartigen Erscheinung 1 abgegebene elektromagnetische Strahlung 5 erfasst. Mittels des Prüfmittels 8 wird eine dahingehende Bewertung vorgenommen, ob es sich bei der erfassten feuerartigen Erscheinung 1 um ein Ereignis handelt, von welchem eine erhöhte Brand- oder Explosionsgefahr ausgeht oder nicht. Handelt es sich um ein solches Ereignis von erhöhter Brand- oder Explosionsgefahr, oder bereits um eine als gefährlich eingestufte Brand-, Flammen-, oder Glutentwicklung, so wird dies von dem Prüfmittel 8 bzw. der Sensoranordnung über eine Signalverbindung 34 an ein Alarmsystem 30 weitergegeben und gegebenenfalls eine Löscheinrichtung 32 zur Beseitigung (also zum Löschen) des Gefahrenzustands aktiviert, was über eine Signalverbindung 35 erfolgen kann. Die Gefahrenbewertung kann jedoch auch unmittelbar in dem Alarmsystem 30 erfolgen. Zum Löschen der feuerartigen Erscheinung 1 bzw. Flamme 31 kann von der Löscheinrichtung 32 ein Löschmittel 33 in das Reservoir 2 eingeleitet werden. Bei dem Löschmittel kann es sich beispielsweise um einen Sprühnebel (aus Wasser oder Löschschaum) handeln.

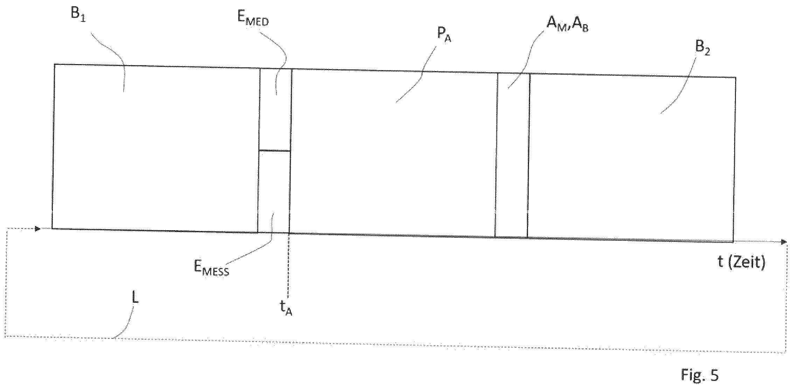

In der Figur 5 ist schematisch Zeitschiene zum Ablauf eines Verfahrens dargestellt. Zunächst wird die Messanordnung 4 in einem ersten Betriebszustand B₁ betrieben. Bei Auftreten eines medienbedingten Ereignisses E_{MED}, dies kann beispielsweise der Wechsel des Mediums 3 oder eine Parameteränderung (eine geänderte Medienkonzentration, ein geänderter Druck, eine geänderte Temperatur etc.), oder eines messbedingten Ereignisses E_{MESS}, z.B. einer erfassten feuerartigen Erscheinung 1, werden die von den Messeinheiten 11, 12, 13, 14 erfassten Messdaten bzw. hinterlegte Mediums- oder Umgebungs-spezifischen Kenndaten zu einem aktuellen Zeitpunkt t_{A} in einem Schritt P_{A} auf Erfüllung des Anpassungskriteriums A geprüft. Bei Erfüllung des Anpassungskriteriums A kann unter Einsatz eines Steuermittels eine Anpassung A_{M} einer Messempfindlichkeit M₁, M₂, M₃ oder eine Anpassung A_{B} eines Betriebsparameters P₁, P₂, P₃ zumindest einer der Messeinheiten 11, 12, 13 situationsadäquat vorgenommen werden. Sodann wird die Vorrichtung in einem zweiten Betriebszustand B₂ weiterbetrieben. Wie anhand der gestrichelten Linie L kenntlich gemacht kann das Verfahren bzw. beschriebene Prozedere nach und nach wiederholt werden.

### Bezugszeichenliste

- 1: feuerartige Erscheinung
- 2: Reservoir
- 3: Medium
- 4: Messanordnung
- 5: elektromagnetische Strahlung
- 6: optisch transparente Einrichtung
- 7: Umgebungslicht
- 8: Prüfmittel
- 9: elektromagnetische Strahlung (Umgebungslicht)
- 10: Steuermittel
- 11: erste Messeinheit
- 12: zweite Messeinheit
- 13: dritte Messeinheit
- 14: Sensoreinheit
- 15a: Datenbank
- 15b: Datenbank
- 16: Sensorgehäuse
- 21: Amplifikationsmodul
- 22: Amplifikationsmodul
- 30: Alarmsystem
- 31: Flamme
- 32: Löscheinrichtung
- 33: Löschmittel
- 34: Signalverbindung
- 35: Signalverbindung
- 36: Förderrichtung
- A: Anpassungskriterium
- A_{B}: Anpassung Betriebsparameter
- A_{M}: Anpassung Messempfindlichkeit
- B₁: erster Betriebszustand
- B₂: zweiter Betriebszustand
- E_{MESS}: Ereignis
- E_{MED}: Ereignis
- L: gestrichelte Linie
- M₁: Messempfindlichkeit
- M₂: Messempfindlichkeit
- M₃: Messempfindlichkeit
- N: Nutzer
- P_{A}: Prüfung auf Erfüllung Anpassungskriteriums
- P₁: Betriebsparameter
- P₂: Betriebsparameter
- P₃: Betriebsparameter
- t_{A}: aktueller Zeitpunkt
- U: Umgebung

## Patentansprüche

1. Vorrichtung zur messtechnischen Erfassung einer feuerartigen Erscheinung (1), nämlich einer Funken-, Flammen- oder Glut oder Heißpartikelerscheinung, in einem mediendurchströmten oder medienbeladenen Reservoir (2), mit einer zur Erfassung von Messdaten ausgebildeten Messanordnung (4), die Messanordnung (4) umfassend eine erste und eine zweite Messeinheit (11, 12) zur Erfassung von seitens der feuerartigen Erscheinung (1) abgegebener elektromagnetischer Strahlung (5) in einem ersten respektive zweiten Wellenlängenbereich, und mit einem Prüfmittel (8),
wobei das Prüfmittel (8) dazu eingerichtet ist,
zu einem aktuellen Zeitpunkt (t_{A}) auf Basis von mit der Messanordnung (4) erfassten Messdaten zu prüfen, ob ein Anpassungskriterium (A) erfüllt ist, **dadurch gekennzeichnet, dass** das Prüfmittel (8) dazu eingerichtet ist, von der ersten und/oder zweiten Messeinheit (11, 12) erfasste Messdaten auf das Vorliegen einer Strahlungsabsorption der von einer feuerartigen Erscheinung (1) abgegebenen elektromagnetischen Strahlung (5) durch das Medium (3) als Anpassungskriterium (A) zu prüfen, wobei im Falle einer diesbezüglichen Positivfeststellung das Anpassungskriterium (A) erfüllt ist, und das Steuermittel (10) dazu eingerichtet ist, zu veranlassen,
a. die zweite Messeinheit (12) abzuschalten, oder
b. eine Messempfindlichkeit (M₂) der zweiten Messeinheit (12) abzuschwächen und/oder
c. eine Messempfindlichkeit (M₁) der ersten Messeinheit (11) zu erhöhen, und/oder
d. einen bezüglich der ersten Messeinheit (11) hinterlegten Schwellwert zur Auslösung eines Gefahrensignals anzupassen, insbesondere zu verringern,
oder wobei das Prüfmittel (8) dazu eingerichtet ist,
zu einem aktuellen Zeitpunkt (t_{A}) auf Basis von hinterlegten Mediums- oder Umgebungs-spezifischen Kenndaten zu prüfen, ob ein Anpassungskriterium (A) erfüllt ist, **gekennzeichnet durch** ein Berechnungsmittel, das Bestandteil des Prüfmittels (8) ist oder mit diesem signaltechnisch verbunden ist, wobei das Berechnungsmittel dazu eingerichtet ist, auf Basis der hinterlegten Mediums- oder Umgebungs-spezifischen Kenndaten einen Wahrscheinlichkeitswert für das Vorliegen einer Strahlungsabsorption der von der feuerartigen Erscheinung (1) abgegebenen elektromagnetischen Strahlung (5) durch das Medium (3) zu berechnen, wobei das Anpassungskriterium (A) ein vorgegebener Wahrscheinlichkeitswert oder ein Wahrscheinlichkeitswertebereich ist, wobei das Prüfmittel (8) dazu eingerichtet ist, zu prüfen, ob der berechnete Wahrscheinlichkeitswert mit dem vorgegebenen Wahrscheinlichkeitswert übereinstimmt oder in dem vorgegebenen Wahrscheinlichkeitswertebereich liegt, wobei im Falle einer diesbezüglichen Positivfeststellung das Anpassungskriterium (A) erfüllt ist und das Steuermittel (10) dazu eingerichtet ist, zu veranlassen,
a. die zweite Messeinheit (12) abzuschalten, oder
b. eine Messempfindlichkeit (M₂) der zweiten Messeinheit (12) abzuschwächen und/oder
c. eine Messempfindlichkeit (M₁) der ersten Messeinheit (11) zu erhöhen, und/oder
d. einen bezüglich der ersten Messeinheit (11) hinterlegten Schwellwert zur Auslösung eines Gefahrensignals anzupassen, insbesondere zu verringern.

## Claims

1. A device for the metrological recording of a fire-like phenomenon (1), namely a spark, flame or ember or hot particle phenomenon, in a reservoir (2) through which a medium flows or which is loaded with a medium, with a measurement arrangement (4) designed to record measurement data, the measurement arrangement (4) comprising a first and a second measuring unit (11, 12) for the detection of electromagnetic radiation (5) emitted by the fire-like phenomenon (1) in a first and second wavelength range respectively, and with test equipment (8),
wherein the test equipment (8) is set up to check at a current point in time (t_{A}) on the basis of measurement data recorded with the measurement arrangement (4) whether an adaptation criterion (A) is met, **characterised in that** the test equipment (8) is set up to check measurement data recorded by the first and/or second measurement unit (11, 12) for the presence of radiation absorption of the electromagnetic radiation (5) emitted by a fire-like phenomenon (1) through the medium (3) as an adaptation criterion (A), wherein the adaptation criterion (A) is met when there is a positive finding in this respect, and the control means (10) is designed to cause
a. the second measurement unit (12) to be switched off or
b. attenuation of a measurement sensitivity (M₂) of the second measurement unit (12), and/or
c. an increase in a measurement sensitivity (M₁) of the first measurement unit (11), and/or
d. adjustment, in particular a reduction, of a threshold value stored in respect of the first measurement unit (11) to trigger a hazard signal,
or wherein the test equipment (8) is set up to check, at a current point in time (t_{A}) on the basis of stored medium- or environment-specific characteristic data, whether an adaptation criterion (A) is a met, **characterised by** a calculation means that is part of the test equipment (8) or is connected thereto in terms of signalling, wherein the calculation means is set up, on the basis of the stored medium- or environmental-specific characteristic data, to calculate a probability value for the presence of radiation absorption of the electromagnetic radiation (5) emitted by the fire-like phenomenon (1) through the medium (3), wherein the adaptation criterion (A) is a predetermined probability value or a range of probability values, wherein the test equipment (8) is set up to check whether the calculated probability value agrees with the predetermined probability value or lies within the predetermined range of probability values, wherein in the event of a positive finding in this regard, the adaptation criterion (A) is met and the control means (10) is set up to cause
a. the second measurement unit (12) to be switched off or
b. a measurement sensitivity (M₂) of the second measurement unit (12) to be attenuated and/or
c. a measurement sensitivity (M₁) of the first measurement unit (11) to be increased, and/or
d. an adjustment, in particular a reduction, of the threshold value stored in respect of the first measurement unit (11) to trigger a hazard signal.

## Revendications

1. Dispositif pour la saisie métrologique d'un phénomène analogue au feu (1), notamment d'un phénomène en rapport avec des étincelles, des flammes ou des braises ou des particules chaudes dans un réservoir (2) traversé par un fluide ou chargé par un fluide, avec un système de mesure (4) constitué par la saisie de données de mesure, le système de mesure (4) comprenant une première et une deuxième unité de mesure (11, 12) pour la saisie du rayonnement électromagnétique (5) émis de la part du phénomène analogue au feu (1) dans une première et respectivement deuxième gamme de longueurs d'ondes, et avec un moyen de contrôle (8),
sachant que le moyen de contrôle (8) est agencé, pour contrôler à un moment actuel (t_{A}) sur la base des données de mesure saisies avec le système de mesure (4), si un critère d'adaptation (A) est satisfait, **caractérisé en ce que** le moyen de contrôle (8) est agencé pour contrôler les données de mesure saisies par la première et/ou la deuxième unité de mesure (11, 12) sur la présence d'une absorption de rayonnement du rayonnement électromagnétique (5) émis par un phénomène analogue au feu (1) par le milieu (3) en tant que critère d'adaptation (A), sachant qu'en cas d'une constatation positive de celle-ci, le critère d'adaptation (A) est satisfait, et le moyen de commande (10) est agencé pour faire que,
a. la deuxième unité de mesure (12) soit arrêtée, ou
b. la sensibilité de mesure (M₂) de la deuxième unité de mesure (12) soit affaiblie, et/ou
c. une sensibilité de mesure (M₁) de la première unité de mesure (11) soit augmentée, et/ou
d. une valeur seuil mémorisée par rapport à la première unité de mesure (11) soit adaptée, en particulier réduite, pour déclencher un signal de danger,
ou sachant que le moyen de contrôle (8) est agencé pour contrôler à un moment actuel (t_{A}) sur la base des caractéristiques spécifiques au milieu ou à l'environnement, si un critère d'adaptation (A) est satisfait, **caractérisé par** un moyen de calcul, qui est un composant du moyen de contrôle (8) ou est relié techniquement par signaux à celui-ci, sachant que le moyen de calcul est agencé pour calculer sur la base des caractéristiques spécifiques au milieu ou à l'environnement mémorisées une valeur de probabilité pour la présence d'une absorption de rayonnement du rayonnement électromagnétique (5) émis par le phénomène analogue au feu (1) par le milieu (3), sachant que le critère d'adaptation (A) est une valeur de probabilité prédéfinie ou une gamme de valeurs de probabilité, sachant que le moyen de contrôle (8) est agencé pour contrôler, si la valeur de probabilité calculée coïncide avec la valeur de probabilité prédéfinie ou se situe dans la gamme de valeurs de probabilité prédéfinie, sachant qu'en cas d'une constatation positive à ce sujet, le critère d'adaptation (A) est satisfait et que le moyen de commande (10) est agencé pour faire que,
a. la deuxième unité de mesure (12) soit arrêtée, ou
b. une sensibilité de mesure (M₂) de la deuxième unité de mesure (12) soit affaiblie et/ou
c. une sensibilité de mesure (M₁) de la première unité de mesure (11) soit augmentée, et/ou
d. une valeur seuil mémorisée par rapport à la première unité de mesure (11) soit adaptée, en particulier réduite, pour déclencher un signal de danger.
